# EUROPEAN PATENT SPECIFICATION

(11) **EP 4 481 570 B1**
(45) Date of publication and mention of the grant of the patent: **24.06.2026**
(21) Application number: 23773881.0
(22) Date of filing: 21.03.2023
(51) Int. Cl.: G06F 11/10

(54) **DATA WRITING METHOD AND PROCESSING SYSTEM**
DATENSCHREIBVERFAHREN UND VERARBEITUNGSSYSTEM
PROCÉDÉ D'ÉCRITURE DE DONNÉES ET SYSTÈME DE TRAITEMENT

(30) Priority: 22.03.2022 CN 202210283000
(43) Date of publication of application: 25.12.2024
(73) Proprietor: Huawei Technologies Co., Ltd., Shenzhen, Guangdong 518129 (CN)
(72) Inventor: CHEN, Zhiyong, Shenzhen, Guangdong 518129 (CN); PAN, Wei, Shenzhen, Guangdong 518129 (CN); XIA, Tian, Shenzhen, Guangdong 518129 (CN)
(74) Representative: Isarpatent
(86) International application number: PCT/CN2023/082920
(87) International publication number: WO 2023/179634

(56) References cited:
- WO-A1-2021/259351
- CN-A- 107 423 159
- CN-A- 108 183 774
- CN-A- 109 634 740
- CN-A- 112 579 342
- JP-A- H0 846 548
- US-A1- 2022 068 423
- US-B1- 6 697 985
- US-B2- 9 201 728

## Description

### TECHNICAL FIELD

This disclosure generally relates to the field of computer technologies.

The invention in particular relates to a data writing method and a processing system as well as to a computer-readable storage medium.

### BACKGROUND

In the computer field, reliability of memory data is critical to performance of an entire system. Especially, data reliability of core data of the system or important application data directly affects running of the entire system. Therefore, a data error correction technology emerges. Whether current data is correct data is determined by using the error correction technology and a predetermined error correction algorithm, to determine reliability of the currently read data.

Currently, an error correction code (error correction code, ECC) technology is used to correct a data error. However, different manufacturers use different ECC spaces and ECC algorithms for different memory devices and different memory types. Therefore, an ECC encoding circuit corresponding to each memory device and each memory type needs to be deployed. In a "chip shortage" context, there is no doubt that this is a challenge. Therefore, how to perform ECC encoding on data in different memory devices and of different memory types is a problem worth considering.

The technical problem addressed in US 2022/068 423 A1 is the increased bit error rate (BER) and reliability issues that arise as NAND flash memory technologies progress from single-level cell (SLC) to multi-level cell (MLC), triple-level cell (TLC), and especially quad-level cell (QLC) memory, which store multiple bits per cell. It is described that as the number of bits per cell increases, the number of memory states (threshold voltage levels) increases exponentially, leading to narrower voltage margins, greater overlap between states, and a higher likelihood of errors when reading data. Additionally, different "pages" (bit positions) within a multi-level cell have inherently different error characteristics, with some pages being more prone to errors than others due to the number of read levels or memory state transitions required to decode them. This problem is generally solved in this document by providing level-dependent error correction code (ECC) protection. Specifically, the document proposes the steps of determining the type of multi-level page (e.g., lower, middle, upper, top) to which data will be written, determining a coding rate for the ECC based on an attribute of the multi-level page, such as its reliability, bit error rate, or the number of read levels/memory state transitions required, generating ECC codewords with variable coding rates (i.e., adjusting the amount of redundancy/parity versus payload data) tailored to the error characteristics of each page type, and storing these ECC codewords on the corresponding multi-level pages, so that pages with higher error rates receive stronger ECC protection (more redundancy), while more reliable pages can use weaker ECC (less redundancy, more user data).

### SUMMARY

The object of the present invention is to provide a data writing method and a processing system as well as to a computer-readable storage medium, to reduce complexity of an ECC encoding circuit in a chip, and reduce deployment costs of the ECC encoding circuit. This object is solved by the attached independent claims and further embodiments and improvements of the invention are listed in the attached dependent claims. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "...aspect according to an example", "the disclosure describes", or "the disclosure" describe technical teaching which relates to the understanding of the invention or its embodiments, which, however, is not claimed as such.

A first aspect according to the invention provides a data writing method. The method is applied to a processing system, and the processing system includes a plurality of types of memories. The method includes:
obtaining first to-be-written data, where the first to-be-written data is data to be written into a first memory in the processing system; determining a first codeword length based on a first redundancy ratio corresponding to the first memory; performing ECC encoding on the first to-be-written data based on the first codeword length, to obtain first redundant data, where the first redundancy ratio is equal to a ratio of a data bit included in the first to-be-written data to a redundant bit included in the first redundant data; obtaining a memory type of the first memory; and writing the first to-be-written data and the first redundant data into the first memory based on the memory type of the first memory.

It can be learned from the foregoing technical solution that the processing system determines
the first codeword length based on the first redundancy ratio corresponding to the first memory, and perform the ECC encoding on the first to-be-written data based on the first codeword length. The processing system implements the ECC encoding on the first to-be-written data based on the first redundancy ratio corresponding to the first memory, and does not need to perform the ECC encoding with reference to the memory type of the first memory. An ECC encoding circuit that supports the first redundancy ratio is configured in the processing system, and the ECC encoding circuit that supports the first redundancy ratio is applicable to performing the ECC encoding on data of a memory with the first redundancy ratio. Therefore, the processing system does not need to deploy a corresponding ECC encoding circuit for each memory type, so that complexity of an ECC encoding circuit in a chip is reduced, and deployment costs of the ECC encoding circuit are reduced.

According to the invention, before the determining a first codeword length based on a first redundancy ratio corresponding to the first memory, the method further includes: determining the first redundancy ratio corresponding to the first memory.

In this implementation, the processing system determines first
the first redundancy ratio corresponding to the first memory, to implement the ECC encoding on the first to-be-written data based on the first redundancy ratio corresponding to the first memory.

According to the invention, the determining the first redundancy ratio corresponding to the first memory includes: determining the first redundancy ratio based on a data memory space in the first memory and an ECC memory space in the first memory.

In this implementation, a manner of determining the first redundancy ratio by the processing system is provided. The processing system determines
the first redundancy ratio with reference to the data memory space in the first memory and the ECC memory space in the first memory. In this way, it is convenient for the processing system to select a proper ECC encoding circuit to encode the first to-be-written data. The processing system does not need to deploy a corresponding ECC encoding circuit for each memory type, so that the complexity of the ECC encoding circuit in the chip is reduced, and the deployment costs of the ECC encoding circuit are reduced.

In another possible implementation, the determining the first redundancy ratio based on a data memory space in the first memory and an ECC memory space in the first memory includes: using a ratio of a size of the data memory space to a size of the ECC memory space as the first redundancy ratio.

In this implementation, the processing system uses the ratio of the size of the data memory space to the size of the ECC memory space as the first redundancy ratio. In this way, the processing system determines the first redundancy ratio with reference to usage of a memory space in the first memory, to help the processing system perform the ECC encoding on the first to-be-written data based on a proper redundancy ratio, and help fully use the ECC memory space in the first memory, correct data by using an ECC bit when an error occurs in the data, and improve stability of the system.

According to the invention, the determining the first redundancy ratio corresponding to the first memory includes: determining the first redundancy ratio based on the data memory space, the ECC memory space, and an isolated memory space that are in the first memory.

In this implementation, another manner of determining the first redundancy ratio by the processing system is provided. When a memory space that needs to be isolated exists in the first memory, the processing system needs to determine the first redundancy ratio with reference to the data memory space, the ECC memory space, and the isolated memory space that are in the first memory. In this way, a memory space that is in the first memory and that can be used as the ECC memory space is properly used with reference to a specific status of the first memory. Data is corrected by using an ECC bit when an error occurs in the data, and stability of the system is improved.

In another possible implementation, the determining the first redundancy ratio based on the data memory space, the ECC memory space, and an isolated memory space that are in the first memory includes:
determining an i^{th} intermediate redundancy ratio, where the i^{th} intermediate redundancy ratio corresponds to an i^{th} degraded memory space, the i^{th} intermediate redundancy ratio is equal to a ratio of a size of the data memory space to a first value, the first value is equal to a size of the ECC memory space minus a size of the i^{th} degraded memory space, and i is an integer greater than or equal to 1; determining whether a size of the isolated memory space is less than or equal to the size of the i^{th} degraded memory space; and if yes, using the i^{th} intermediate redundancy ratio as the first redundancy ratio.

In this implementation, a specific implementation in which the processing system determines the first redundancy ratio based on the data memory space, the ECC memory space, and the isolated memory space that are in the first memory is provided. The processing system may first preliminarily determine the i^{th} intermediate redundancy ratio for the first memory. Then, the processing system determines whether the size of the isolated memory space is less than or equal to the size of the i^{th} degraded memory space. To be specific, the processing system performs degradation processing on the first memory, in other words, reduces the memory space that is in the first memory and that is used as the ECC memory space. Then, the processing system determines whether a size of a reduced ECC memory space is greater than or equal to the size of the isolated memory space. The processing system reduces the redundancy ratio corresponding to the first memory step by step, to help to select a proper redundancy ratio for the first memory, and help select a redundancy ratio supported by the processing system to perform the ECC encoding on the first to-be-written data, so as to reduce the complexity of the ECC encoding circuit in the chip.

In another possible implementation, the method further includes: outputting an i^{th} piece of warning information, where the i^{th} piece of warning information indicates that the isolated memory space appears in the first memory.

In this implementation, the processing system performs the degradation processing on the first memory for one time, and the processing system may output corresponding warning information. In this way, a user is reminded that the isolated memory space appears in the first memory, to help the user replace a proper memory in time, and avoid a case in which the user detects a problem only until the system breaks down or stops working.

In another possible implementation, if the i^{th} intermediate redundancy ratio is equal to 0, the i^{th} piece of warning information further indicates to replace the first memory.

In this implementation, when the i^{th} intermediate redundancy ratio is equal to 0, the i^{th} piece of warning information further indicates to replace the first memory. When the i^{th} intermediate redundancy ratio is equal to 0, it indicates that there is no space that can be used as an ECC memory in the first memory, in other words, a memory space that needs to be isolated in the first memory is greater than or equal to a space that is originally used as the ECC memory in the first memory. The processing system may remind, by using the i^{th} piece of warning information, the user that the first memory no more has an ECC function and the first memory needs to be replaced in time. A problem that the system is unstable because the ECC encoding cannot be performed on the data is avoided.

In another possible implementation, if the size of the isolated memory space is equal to the size of the i^{th} degraded memory space, the method further includes: determining an (i+1)^{th} intermediate redundancy ratio, where the (i+1)^{th} intermediate redundancy ratio corresponds to an (i+1)^{th} degraded memory space, the (i+1)^{th} intermediate redundancy ratio is equal to a ratio of the size of the data memory space to a second value, and the second value is equal to the size of the ECC memory space minus a size of the (i+1)^{th} degraded memory space; determining whether the size of the isolated memory space is less than or equal to the size of the (i+1)^{th} degraded memory space; and if yes, using the (i+1)^{th} intermediate redundancy ratio as the first redundancy ratio.

In this implementation, if the size of the isolated memory space is equal to the size of the i^{th} degraded memory space, the processing system may further perform the degradation processing on the first memory, so that the processing system performs the ECC encoding on the first to-be-written data based on the proper redundancy ratio.

In another possible implementation, the method further includes: outputting an (i+1)^{th} piece of warning information, where the (i+1)^{th} piece of warning information indicates that the isolated memory space appears in the first memory.

In this implementation, the processing system performs the degradation processing on the first memory for one time, and the processing system may output corresponding warning information. In this way, this implementation helps remind the user that the isolated memory space appears in the first memory, a status of the first memory needs to be tracked in time and the first memory needs to be replaced if necessary, to ensure the stability of the system.

In another possible implementation, a difference between the size of the i^{th} degraded memory space and the size of the (i+1)^{th} degraded memory space is greater than or equal to a difference between the size of the (i+1)^{th} degraded memory space and a size of an (i+2)^{th} degraded memory space.

In this implementation, in a process in which the processing system degrades the first memory, the difference between the size of the i^{th} degraded memory space and the size of the (i+1)^{th} degraded memory space is greater than or equal to the difference between the size of the (i+1)^{th} degraded memory space and the size of the (i+2)^{th} degraded memory space. This implementation helps the processing system properly reduce the space that is in the first memory and that is used as the ECC memory.

In another possible but not claimed implementation, the determining the first redundancy ratio corresponding to the first memory includes: reading a recorded first redundancy ratio corresponding to the first memory.

In this implementation, the processing system may record the redundancy ratio corresponding to the first memory, to facilitate reading the first redundancy ratio.

In another possible but also not claimed implementation, the writing the first to-be-written data and the first redundant data into the first memory based on the memory type includes:
connecting the redundant bit in the first redundant data to the data bit included in the first to-be-written data, to obtain a first bit sequence; copying a data bit that is in the first bit sequence and that is to be written into the isolated memory space; connecting the data bit that is to be written into the isolated memory space to a last bit in the first bit sequence, to obtain a second bit sequence; and writing the second bit sequence into the first memory based on a bit sequence of the second bit sequence.

In this implementation, in a scenario in which the isolated memory space exists, the processing system needs to store, in a corresponding replacement memory space, a bit that is in the first to-be-written data and that is originally to be stored in the isolated memory space, to successfully avoid a faulty isolated memory space.

A second aspect of embodiments of this application provides a processing system, wherein the second aspect and any of its implementations and options below are not claims. The processing system includes a plurality of types of memories. The processing system includes:
an obtaining unit, configured to obtain first to-be-written data, where the first to-be-written data is data to be written into a first memory in the processing system;
an encoding unit, configured to determine a first codeword length based on a first redundancy ratio corresponding to the first memory; and perform ECC encoding on the first to-be-written data based on the first codeword length, to obtain first redundant data, where the first redundancy ratio is equal to a ratio of a data bit included in the first to-be-written data to a redundant bit included in the first redundant data, where
the obtaining unit is further configured to obtain a memory type of the first memory; and
a writing unit, configured to write the first to-be-written data and the first redundant data into the first memory based on the memory type of the first memory.

In a possible implementation, the processing system further includes a determining unit, where
the determining unit is configured to determine the first redundancy ratio corresponding to the first memory.

In another possible implementation, the determining unit is specifically configured to:
determine the first redundancy ratio based on a data memory space in the first memory and an ECC memory space in the first memory.

In another possible not claimed implementation, the determining unit is specifically configured to:
use a ratio of a size of the data memory space to a size of the ECC memory space as the first redundancy ratio.

In another possible implementation, the determining unit is specifically configured to:
determine the first redundancy ratio based on the data memory space, the ECC memory space, and an isolated memory space that are in the first memory.

In another possible implementation, the determining unit is specifically configured to:
determine an i^{th} intermediate redundancy ratio, where the i^{th} intermediate redundancy ratio corresponds to an i^{th} degraded memory space, the i^{th} intermediate redundancy ratio is equal to a ratio of a size of the data memory space to a first value, the first value is equal to a size of the ECC memory space minus a size of the i^{th} degraded memory space, and i is an integer greater than or equal to 1; determine whether a size of the isolated memory space is less than or equal to the size of the i^{th} degraded memory space; and if yes, use the i^{th} intermediate redundancy ratio as the first redundancy ratio.

In another not claimed possible implementation, the processing system further includes an output unit, where
the output unit is configured to output an i^{th} piece of warning information, where the i^{th} piece of warning information indicates that the isolated memory space appears in the first memory.

In another possible implementation, if the i^{th} intermediate redundancy ratio is equal to 0, the i^{th} piece of warning information further indicates to replace the first memory.

In another possible implementation, if the size of the isolated memory space is equal to the size of the i^{th} degraded memory space, the determining unit is further configured to:
determine an (i+1)^{th} intermediate redundancy ratio, where the (i+1)^{th} intermediate redundancy ratio corresponds to an (i+1)^{th} degraded memory space, the (i+1)^{th} intermediate redundancy ratio is equal to a ratio of the size of the data memory space to a second value, and the second value is equal to the size of the ECC memory space minus a size of the (i+1)^{th} degraded memory space;
determine whether the size of the isolated memory space is less than or equal to the size of the (i+1)^{th} degraded memory space; and if yes, use the (i+1)^{th} intermediate redundancy ratio as the first redundancy ratio.

In another not claimed possible implementation, the output unit is further configured to:
output an (i+1)^{th} piece of warning information, where the (i+1)^{th} piece of warning information indicates that the isolated memory space appears in the first memory.

In another possible implementation, a difference between the size of the i^{th} degraded memory space and the size of the (i+1)^{th} degraded memory space is greater than or equal to a difference between the size of the (i+1)^{th} degraded memory space and a size of an (i+2)^{th} degraded memory space.

In another not claimed possible implementation, the determining unit is further configured to:
read a recorded first redundancy ratio corresponding to the first memory.

In another not claimed possible implementation, the writing unit is specifically configured to:
connect the redundant bit in the first redundant data to the data bit included in the first to-be-written data, to obtain a first bit sequence; copy a data bit that is in the first bit sequence and that is to be written into the isolated memory space; connect the data bit that is to be written into the isolated memory space to a last bit in the first bit sequence, to obtain a second bit sequence; and write the second bit sequence into the first memory based on a bit sequence of the second bit sequence.

A third aspect according to the invention provides a processing system. The processing system includes a plurality of types of memories and a memory controller. The memory controller is configured to perform the following solutions:
obtaining first to-be-written data, where the first to-be-written data is data to be written into a first memory in the processing system; determining a first codeword length based on a first redundancy ratio corresponding to the first memory; performing ECC encoding on the first to-be-written data based on the first codeword length, to obtain first redundant data, where the first redundancy ratio is equal to a ratio of a data bit included in the first to-be-written data to a redundant bit included in the first redundant data; obtaining a memory type of the first memory; and writing the first to-be-written data and the first redundant data into the first memory based on the memory type of the first memory.

In a possible implementation, the memory controller is specifically configured to:
determine the first redundancy ratio corresponding to the first memory.

In another possible implementation, the memory controller is specifically configured to:
determine the first redundancy ratio based on a data memory space in the first memory and an ECC memory space in the first memory.

In another possible implementation, the memory controller is specifically configured to:
use a ratio of a size of the data memory space to a size of the ECC memory space as the first redundancy ratio.

In another possible implementation, the memory controller is specifically configured to:
determine the first redundancy ratio based on the data memory space, the ECC memory space, and an isolated memory space that are in the first memory.

In another possible implementation, the memory controller is specifically configured to:
determine an i^{th} intermediate redundancy ratio, where the i^{th} intermediate redundancy ratio corresponds to an i^{th} degraded memory space, the i^{th} intermediate redundancy ratio is equal to a ratio of a size of the data memory space to a first value, the first value is equal to a size of the ECC memory space minus a size of the i^{th} degraded memory space, and i is an integer greater than or equal to 1; determine whether a size of the isolated memory space is less than or equal to the size of the i^{th} degraded memory space; and if yes, use the i^{th} intermediate redundancy ratio as the first redundancy ratio.

In another possible implementation, the memory controller is further configured to:
output an i^{th} piece of warning information, where the i^{th} piece of warning information indicates that the isolated memory space appears in the first memory.

In another possible implementation, if the i^{th} intermediate redundancy ratio is equal to 0, the i^{th} piece of warning information further indicates to replace the first memory.

In another possible implementation, if the size of the isolated memory space is equal to the size of the i^{th} degraded memory space, the memory controller is further configured to:
determine an (i+1)^{th} intermediate redundancy ratio, where the (i+1)^{th} intermediate redundancy ratio corresponds to an (i+1)^{th} degraded memory space, the (i+1)^{th} intermediate redundancy ratio is equal to a ratio of the size of the data memory space to a second value, and the second value is equal to the size of the ECC memory space minus a size of the (i+1)^{th} degraded memory space; determine whether the size of the isolated memory space is less than or equal to the size of the (i+1)^{th} degraded memory space; and if yes, use the (i+1)^{th} intermediate redundancy ratio as the first redundancy ratio.

In another possible implementation, the memory controller is further configured to:
output an (i+1)^{th} piece of warning information, where the (i+1)^{th} piece of warning information indicates that the isolated memory space appears in the first memory.

In another possible implementation, a difference between the size of the i^{th} degraded memory space and the size of the (i+1)^{th} degraded memory space is greater than or equal to a difference between the size of the (i+1)^{th} degraded memory space and a size of an (i+2)^{th} degraded memory space.

In another possible implementation, the memory controller is specifically configured to:
read a recorded first redundancy ratio corresponding to the first memory.

In another possible implementation, the memory controller is specifically configured to:
connect the redundant bit in the first redundant data to the data bit included in the first to-be-written data, to obtain a first bit sequence; copy a data bit that is in the first bit sequence and that is to be written into the isolated memory space; connect the data bit that is to be written into the isolated memory space to a last bit in the first bit sequence, to obtain a second bit sequence; and write the second bit sequence into the first memory based on a bit sequence of the second bit sequence.

A fifth aspect according to the invention provides a processing system. The processing system includes a processor,
a processor, a storage, and an input/output interface. The processor and the storage are connected to the input/output interface. The storage is configured to store program code. The processor invokes the program code in the storage to perform the method in the first aspect.

A sixth aspect according to the invention provides a storage medium, including computer instructions. When the computer instructions are run on a computer, the computer is configured to execute a program designed by the processing system in the first aspect.

A seventh not claimed aspect of this application provides a computer program product including instructions. When the computer program product runs on a computer, the computer is enabled to perform the method in any one of the optional implementations in the first aspect in this application.

It can be learned from the foregoing technical solutions that embodiments of this application have the following advantages.

It can be learned from the foregoing technical solutions that, this application provides the data writing method. The method is applied to the processing system. The processing system includes the plurality of types of memories. The method includes: obtaining the first to-be-written data, where the first to-be-written data is the data to be written into the first memory in the processing system; determining the first codeword length based on the first redundancy ratio corresponding to the first memory; performing the ECC encoding on the first to-be-written data based on the first codeword length, to obtain the first redundant data, where the first redundancy ratio is equal to the ratio of the data bit included in the first to-be-written data to the redundant bit included in the first redundant data; obtaining the memory type of the first memory; and writing the first to-be-written data and the first redundant data into the first memory based on the memory type of the first memory. It can be learned that, in the technical solutions of this application, the processing system determines
the first codeword length based on the first redundancy ratio corresponding to the first memory, and perform the ECC encoding on the first to-be-written data based on the first codeword length. In other words, the processing system implements the ECC encoding on the first to-be-written data by learning of the first redundancy ratio corresponding to the first memory, and does not need to perform the ECC encoding with reference to the memory type of the first memory. The ECC encoding circuit that supports the first redundancy ratio is configured in the processing system, and the ECC encoding circuit that supports the first redundancy ratio is applicable to performing the ECC encoding on the data of the memory with the first redundancy ratio. The processing system does not need to deploy a corresponding ECC encoding circuit for each memory type, so that the complexity of the ECC encoding circuit in the chip is reduced, and the deployment costs of the ECC encoding circuit are reduced.

In the following description, features which in the above summary of the invention have been marked as "not claimed" or "according to the invention" are also hereinafter, when they are described and explained with reference to the drawings, to be understood as "not claimed" or "not part of the invention" or "according to the invention". Even if sometimes in the description of the embodiments below, features marked above "according to the invention" or "the invention" are referred to in connection with the words "can" or "may" or other expressions which contain the notion of them being "optional", it should be understood that indeed such features are considered essential to the invention as claimed and not optional.

### BRIEF DESCRIPTION OF DRAWINGS

FIG. 1 is a schematic diagram of a memory according to an embodiment of this application;
FIG. 2 is a schematic diagram of a processing system according to an embodiment of this application;
FIG. 3 is a schematic diagram of an embodiment of a data writing method according to an embodiment of this application;
FIG. 4 is a schematic diagram of a process of a data writing method according to an embodiment of this application;
FIG. 5A is a schematic diagram of a first memory according to an embodiment of this application;
FIG. 5B is another schematic diagram of a first memory according to an embodiment of this application;
FIG. 5C is another schematic diagram of a first memory according to an embodiment of this application;
FIG. 5D is another schematic diagram of a first memory according to an embodiment of this application;
FIG. 5E is another schematic diagram of a first memory according to an embodiment of this application;
FIG. 6A is another schematic diagram of a first memory according to an embodiment of this application;
FIG. 6B is another schematic diagram of a first memory according to an embodiment of this application;
FIG. 7A is another schematic diagram of a first memory according to an embodiment of this application;
FIG. 7B is another schematic diagram of a first memory according to an embodiment of this application;
FIG. 8 is a schematic diagram of another embodiment of a data writing method according to an embodiment of this application;
FIG. 9 is another schematic diagram of a first memory according to an embodiment of this application;
FIG. 10 is a schematic diagram of a structure of a processing system according to an embodiment of this application; and
FIG. 11 is a schematic diagram of another structure of a processing system according to an embodiment of this application.

### DESCRIPTION OF EMBODIMENTS

Embodiments of this application provides a data writing method and a processing system, to reduce complexity of an ECC encoding circuit in a chip, and reduce deployment costs of the ECC encoding circuit.

The following clearly and completely describes the technical solutions in embodiments of this application with reference to the accompanying drawings in embodiments of this application. It is clear that the described embodiments are merely a part of but not all of embodiments of this application. All other embodiments obtained by a person skilled in the art based on embodiments of this application without creative efforts shall fall within the protection scope of this application.

Reference to "an embodiment", "some embodiments", or the like described in this application indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

In descriptions of this application, unless otherwise specified, "/" means "or". For example, A/B may represent A or B. A term "and/or" in this specification describes only an association relationship between associated objects and indicates that there may be three relationships. For example, A and/or B may represent the following three cases: Only A exists, both A and B exist, and only B exists. In addition, "at least one" means one or more, and "a plurality of" means two or more. "At least one of the following items (pieces)" or a similar expression thereof indicates any combination of these items, including a single item (piece) or any combination of a plurality of items (pieces). For example, at least one of a, b, or c may represent a, b, c, a and b, a and c, b and c, or a, b, and c. Each of a, b, and c may be singular or plural.

The following describes some technical terms in this application.

A cache line (cache line) refers to a size of a piece of data cached by a cache unit (cache unit) in a processor. A size of the cache line varies with different processors. The size of the cache line in a current mainstream computer and server is 64 bytes (Bytes). Usually, a size of data that can be cached and that is transported in the processor is the same as 64 bytes.

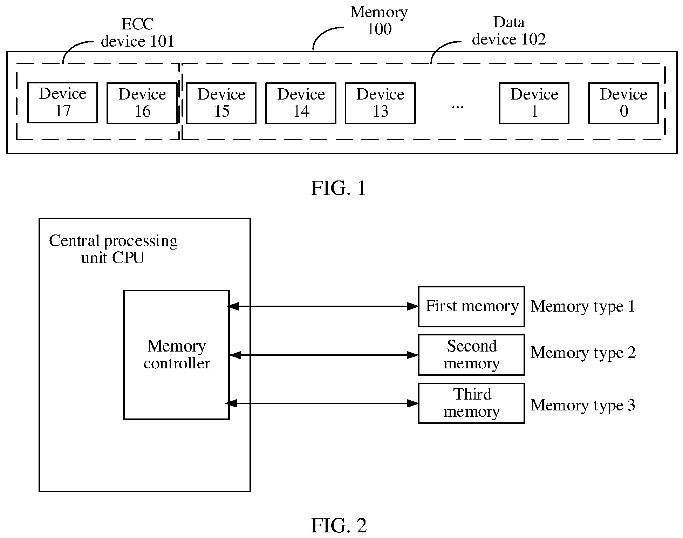

A memory device (device) is a core component of a memory module, a storage medium of a memory and directly relates to memory performance. FIG. 1 is a schematic diagram of a memory according to an embodiment of this application. It can be learned from FIG. 1 that, a memory 100 includes one or more memory devices. According to different content stored in the memory devices, the memory devices are further classified into a data device 102 and an ECC device 101. Specifications of the memory device usually include an X4 device, an X8 device, and an X16 device. X4, X8, and X16 represent that an external data line of each memory device is 4 DQ, 8 DQ, and 16 DQ respectively. One piece of DQ corresponds to one pin (pin) on a physical dual in-line memory module (dual In-line memory module, DIMM). DQ may be translated into a data transmission signal (data strobe signal).

Embodiments of this application are applied to a processing system, and the processing system is a set including a plurality of pieces of hardware and software. The processing system may be a storage system, and the processing system may be integrated into a node device or a server. This is not specifically limited in this application.

The following describes a possible schematic diagram of a processing system provided in this application with reference to FIG. 2.

FIG. 2 is a schematic diagram of a processing system according to an embodiment of this application. Refer to FIG. 2. The processing system includes a central processor and a plurality of types of memories. As shown in FIG. 2, a memory controller is integrated in a central processing unit (central processing unit, CPU), and the central processing unit is connected to a first memory, a second memory, and a third memory by using the memory controller. Memory types of the first memory, the second memory, and the third memory are different. A data writing method provided in embodiments of this application may be performed by the memory controller.

The processing system shown in FIG. 2 is merely intended to describe a system architecture to which embodiments of this application are applied, and does not limit the system architecture to which embodiments of this application are applied. For example, the data writing method in embodiments of this application is also applicable to a chip system, and a process of data writing is performed in the chip system.

It should be noted that the processing system shown in FIG. 2 is merely an example. During actual application, the processing system may include at least two types of memories, and the memory controller is connected to the at least two types of memories.

It should be noted that the processing system shown in FIG. 2 is merely an example. During actual application, the processing system may alternatively include more memory controllers and more memories, or more central processing units and more memories. This is not specifically limited in this application.

For ease of understanding, the following describes the technical solutions of this application with reference to specific embodiments.

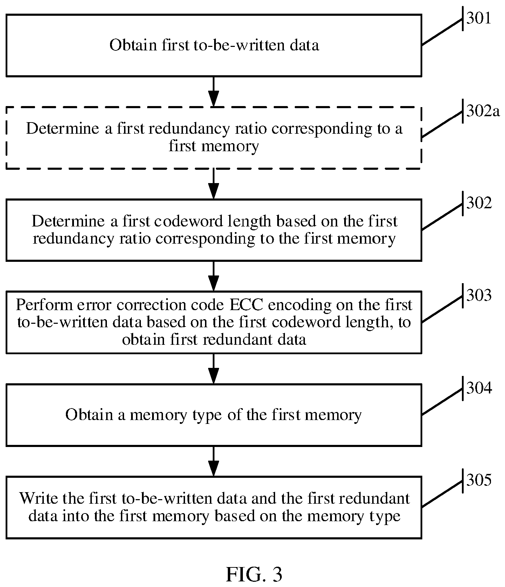

FIG. 3 is a schematic diagram of an embodiment of a data writing method according to an embodiment of this application. Refer to FIG. 3. The method is applied to a processing system, and the processing system includes a plurality of types of memories. The method includes the following steps.

301: The processing system obtains first to-be-written data.

The processing system includes the plurality of types of memories. The first to-be-written data is data to be written into a first memory included in a first processing system.

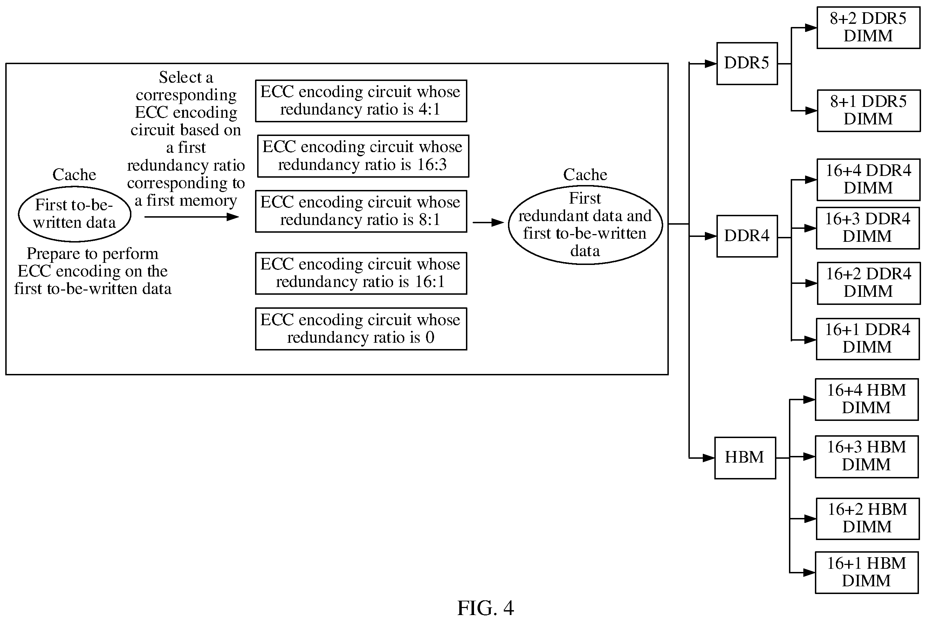

For example, as shown in FIG. 4, the processing system caches the first to-be-written data, and a size of the first to-be-written data is 64 bytes (Bytes), namely, 512 bits.

The processing system includes the plurality of types of memories. For example, the processing system includes a double data rate 5 synchronous dynamic random-access memory (double data rate 5 synchronous dynamic random-access memory, DDR5 SDRAM), a DDR4, a high bandwidth memory (high bandwidth memory, HBM), a low power double data rate synchronous dynamic random-access memory (low power double data rate synchronous dynamic random-access memory, LPDDR SDRAM), a memory of a non-joint electron device engineering council (joint electron device engineering council, JEDEC) standard, and the like.

302: The processing system determines a first codeword length based on a first redundancy ratio corresponding to the first memory.

Specifically, the processing system may determine the first redundancy ratio corresponding to the first memory. Then, the processing system determines the first codeword length based on the first redundancy ratio corresponding to the first memory.

Optionally, the embodiment shown in FIG. 3 further includes step 302a. Step 302a may be performed before step 302.

302a: The processing system determines the first redundancy ratio corresponding to the first memory.

The following describes some possible implementations of step 302a.

Implementation 1: The processing system determines the first redundancy ratio based on a data memory space and an ECC memory space that are in the first memory.

Specifically, the processing system uses a ratio of a size of the data memory space in the first memory to a size of the ECC memory space as the first redundancy ratio.

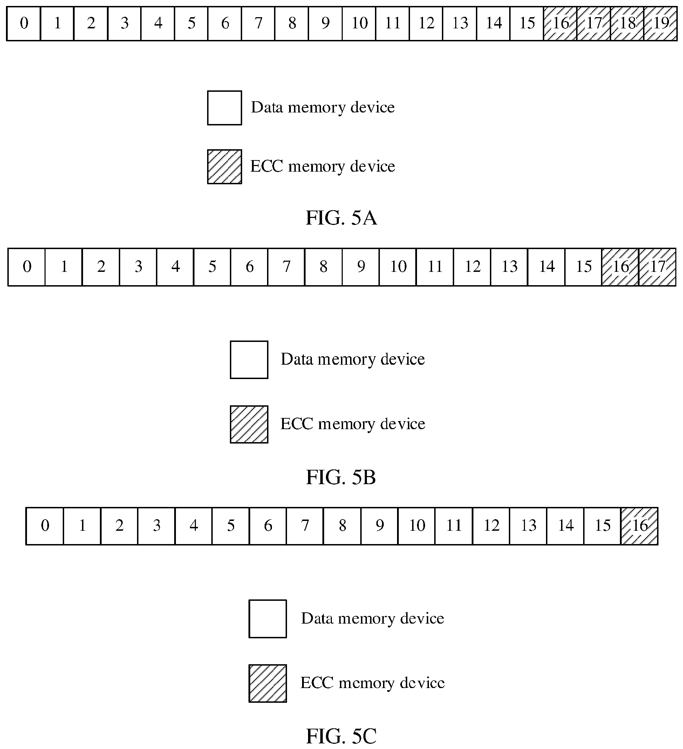

For example, as shown in FIG. 5A, a first memory includes 16 data memory devices and four ECC memory devices. Therefore, the processing system may determine that a first redundancy ratio corresponding to the first memory is 4:1.

For example, as shown in FIG. 5B, a first memory includes 16 data memory devices and two ECC memory devices. Therefore, the processing system may determine that a first redundancy ratio corresponding to the first memory is 8:2.

For example, as shown in FIG. 5C, a first memory includes 16 data memory devices and one ECC memory device. Therefore, the processing system may determine that a first redundancy ratio corresponding to the first memory is 16:1.

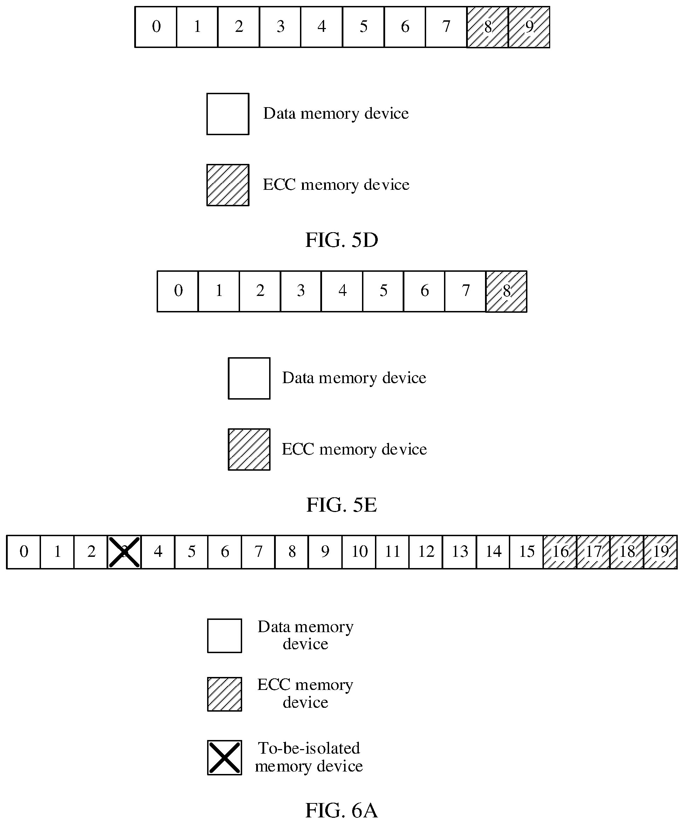

For example, as shown in FIG. 5D, a first memory includes eight data memory devices and two ECC memory devices. Therefore, the processing system may determine that a first redundancy ratio corresponding to the first memory is 4:1.

For example, as shown in FIG. 5E, a first memory includes eight data memory devices and one ECC memory device. Therefore, the processing system may determine that a first redundancy ratio corresponding to the first memory is 8:1.

It should be noted that, in the foregoing examples, the technical solution of this application is described by using an example in which the data memory space and the ECC memory space are separately located in different memory devices. During actual application, the data memory space and the ECC memory space may be located in a same memory device. This is not specifically limited in this application. For ease of describing the technical solution of this application, the following describes the technical solution of this application by using the example in which the data memory space and the ECC memory space are separately located in different memory devices.

Implementation 2: The processing system determines the first redundancy ratio based on the data memory space, the ECC memory space, and an isolated memory space that are in the first memory.

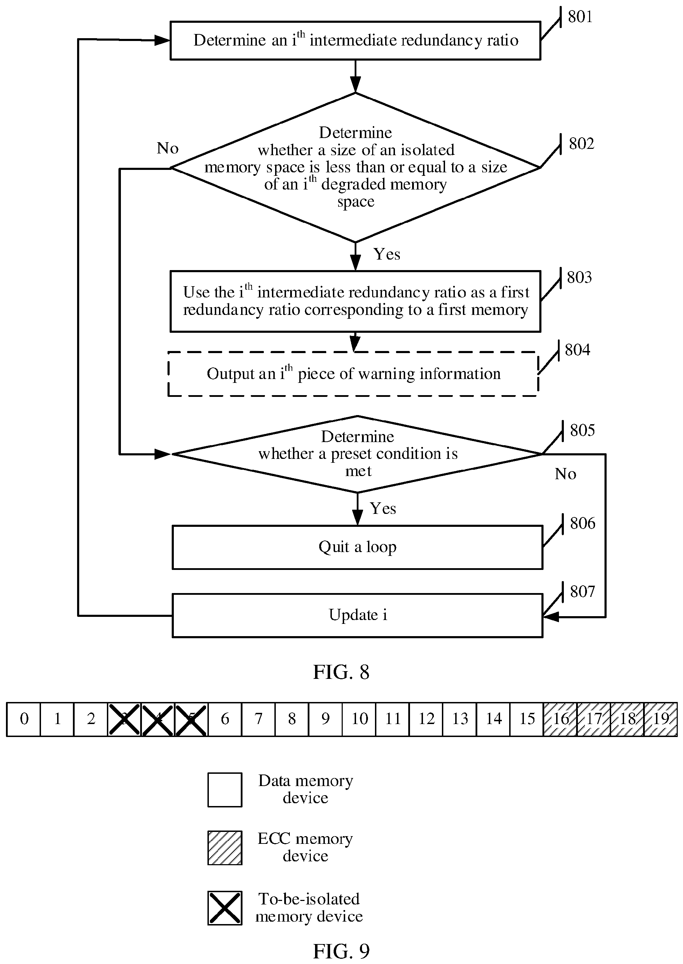

The processing system determines the isolated memory space in the first memory. The processing system determines the first redundancy ratio based on the data memory space, the ECC memory space, and the isolated memory space that are in the first memory. For a specific determining process in the implementation 2, refer to related descriptions in an embodiment shown in FIG. 8 below. In the implementation 2, the first redundancy ratio corresponding to the first memory may be understood as a degraded redundancy ratio corresponding to the first memory.

The following describes some possible implementations in which the processing system determines the isolated memory space in the first memory.

The processing system determines the isolated memory space in the first memory based on a quantity of times for which a correctable error (correctable error, CE) occurs in a historical data reading process. Alternatively, the processing system determines, in another determining manner, that a hard failure occurs in some memory spaces in the first memory, and a memory controller may use these memory spaces as isolated memory spaces.

For example, as shown in FIG. 6A, the processing system reads data from a data memory device 3. In a historical data reading record, a quantity of times for which a CE occurs in the data memory device 3 reaches a specific threshold, and the processing system may consider that the data memory device 3 needs to be isolated. In other words, the data memory device 3 is the isolated memory space. The processing system may record a location of the isolated memory space in the first memory. For a scenario shown in FIG. 6A, the processing system may determine that the first redundancy ratio corresponding to the first memory is 16:3.

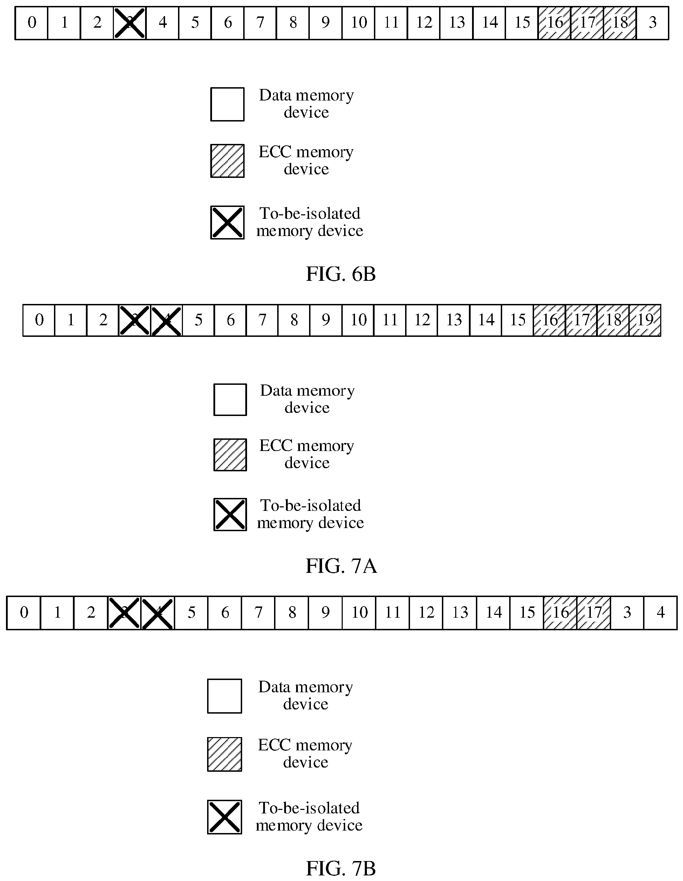

For example, as shown in FIG. 7A, the processing system reads data from a data memory device 3 and a data memory device 4. In a historical data reading record, a quantity of times for which a CE occurs in the data memory device 3 and a quantity of times for which a CE occurs in the data memory device 4 both reach a specific threshold, and the processing system may consider that the data memory device 3 and the data memory device 4 need to be isolated. In other words, the data memory device 3 and the data memory device 4 are the isolated memory spaces. The processing system may record locations of the isolated memory spaces in the first memory. For a scenario shown in FIG. 7A, the processing system may determine that the first redundancy ratio corresponding to the first memory is 8:1.

Implementation 3: The processing system reads a recorded first redundancy ratio corresponding to the first memory.

The processing system reads the first redundancy ratio corresponding to the first memory from a memory address storing the first redundancy ratio; or the processing system reads the first redundancy ratio corresponding to the first memory from a register.

Optionally, the first redundancy ratio corresponding to the first memory may be a ratio of a size of a data memory space in the first memory to a size of an ECC memory space. Alternatively, the first redundancy ratio corresponding to the first memory is a degraded redundancy ratio corresponding to the first memory. For details, refer to the related descriptions in the foregoing implementation 2.

The following describes, with reference to a specific example, a process in which the processing system determines the first codeword length based on the first redundancy ratio corresponding to the first memory.

For example, as shown in FIG. 5A, the first redundancy ratio corresponding to the first memory is 4:1. With reference to FIG. 4, it can be learned that the memory controller may select an ECC encoding circuit whose redundancy ratio is 4:1, and input the first to-be-written data into the ECC encoding circuit whose redundancy ratio is 4:1. Eight bursts (8 bursts) of data are used to form a cache line, and each memory device in the first memory is an X4 memory device. Therefore, it can be learned that the memory controller may determine that the first codeword length is 20 * 4 * 8 = 640 bits. To be specific, one codeword includes 512 data bits and 128 ECC bits.

For example, as shown in FIG. 5B, the first redundancy ratio corresponding to the first memory is 8:1. With reference to FIG. 4, it can be learned that the memory controller may select an ECC encoding circuit whose redundancy ratio is 8:1, and input the first to-be-written data into the ECC encoding circuit whose redundancy ratio is 8:1. Eight bursts are used as a cache line, and each memory device in the first memory is an X4 memory device. Therefore, it can be learned that the memory controller may determine that the first codeword length is 18 * 4 * 8 = 576 bits. To be specific, one codeword includes 512 data bits and 64 ECC bits.

For example, as shown in FIG. 5C, the first redundancy ratio corresponding to the first memory is 16:1. With reference to FIG. 4, it can be learned that the memory controller may select an ECC encoding circuit whose redundancy ratio is 16:1, and input the first to-be-written data into the ECC encoding circuit whose redundancy ratio is 8:1. Eight bursts are used as a cache line, and each memory device in the first memory is an X4 memory device. Therefore, it can be learned that the memory controller may determine that the first codeword length is 17 * 4 * 8 = 544 bits. To be specific, one codeword includes 512 data bits and 32 ECC bits.

For example, as shown in FIG. 5D, the first redundancy ratio corresponding to the first memory is 4:1. With reference to FIG. 4, it can be learned that the memory controller may select an ECC encoding circuit whose redundancy ratio is 4:1, and input the first to-be-written data into the ECC encoding circuit whose redundancy ratio is 4:1. 16 bursts are used as a cache line, and each memory device in the first memory is an X4 memory device. Therefore, it can be learned that the memory controller may determine that the first codeword length is 10 * 4 * 16 = 640 bits. To be specific, one codeword includes 512 data bits and 128 ECC bits.

For example, as shown in FIG. 5E, the first redundancy ratio corresponding to the first memory is 8:1. With reference to FIG. 4, it can be learned that the memory controller may select an ECC encoding circuit whose redundancy ratio is 8:1, and input the first to-be-written data into the ECC encoding circuit whose redundancy ratio is 8:1. 16 bursts are used as a cache line, and each memory device in the first memory is an X4 memory device. Therefore, it can be learned that the memory controller may determine that the first codeword length is 9 * 4 * 16 = 576 bits. To be specific, one codeword includes 512 data bits and 64 ECC bits.

It should be noted that codeword lengths used by the processing system in the foregoing examples are all 640 bits. During actual application, another length may alternatively be used as the codeword length. For example, a codeword length is 320 bits, and the processing system may perform encoding by using a plurality of codewords. This is not specifically limited in this application.

For example, as shown in FIG. 6A, the first redundancy ratio corresponding to the first memory is 16:3. With reference to FIG. 4, it can be learned that the memory controller may select an ECC encoding circuit whose redundancy ratio is 16:3, and input the first to-be-written data into the ECC encoding circuit whose redundancy ratio is 16:3. Eight bursts are used as a cache line, and each memory device in the first memory is an X4 memory device. Because the data memory device 3 needs to be isolated, the memory controller may determine that the first codeword length is 19 * 4 * 8 = 608 bits. To be specific, one codeword includes 512 data bits and 96 ECC bits.

For example, as shown in FIG. 7A, the first redundancy ratio corresponding to the first memory is 8:1. With reference to FIG. 4, it can be learned that the memory controller may select an ECC encoding circuit whose redundancy ratio is 8:1, and input the first to-be-written data into the ECC encoding circuit whose redundancy ratio is 8:1. Eight bursts are used as a cache line, and each memory device in the first memory is an X4 memory device. Because the data memory device 3 and the data memory device 4 need to be isolated, the memory controller may determine that the first codeword length is 18 * 4 * 8 = 576 bits. To be specific, one codeword includes 512 data bits and 64 ECC bits.

303: The processing system performs ECC encoding on the first to-be-written data based on the first codeword length, to obtain first redundant data.

Optionally, the processing system may perform the ECC encoding on the first to-be-written data by using a Reed-Solomon code (Reed-Solomon, RS) encoding algorithm.

For example, as shown in FIG. 5A, the first codeword length is 640 bits, and the first to-be-written data includes 512 bits. The processing system performs the ECC encoding on the first to-be-written data based on the first codeword length, to obtain the first redundant data. The first redundant data includes 128 ECC bits.

For example, as shown in FIG. 5B, the first codeword length is 576 bits, and the first to-be-written data includes 512 bits. The processing system performs the ECC encoding on the first to-be-written data based on the first codeword length, to obtain the first redundant data. The first redundant data includes 64 ECC bits.

For example, as shown in FIG. 6A, the first codeword length is 608 bits, and the first to-be-written data includes 512 bits. The processing system performs the ECC encoding on the first to-be-written data based on the first codeword length, to obtain the first redundant data. The first redundant data includes 96 ECC bits.

For example, as shown in FIG. 7A, the first codeword length is 576 bits, and the first to-be-written data includes 512 bits. The processing system performs the ECC encoding on the first to-be-written data based on the first codeword length, to obtain the first redundant data. The first redundant data includes 64 ECC bits.

It should be noted that, in the foregoing examples, the processing system performs the encoding by using one codeword. During actual application, the processing system may perform the encoding by using a plurality of codewords. In this case, the processing system can determine a length of each codeword with reference to a quantity of codewords. Then, the processing system performs the ECC encoding on the first to-be-written data based on the length of the codeword and the quantity of codewords.

It can be learned that the processing system implements the ECC encoding on the first to-be-written data based on the first redundancy ratio corresponding to the first memory, and does not need to perform the ECC encoding with reference to a memory type of the first memory. An ECC encoding circuit that supports the first redundancy ratio is configured in the processing system, and the ECC encoding circuit that supports the first redundancy ratio is applicable to performing the ECC encoding on data of a memory with the first redundancy ratio. The processing system does not need to deploy a corresponding ECC encoding circuit for each memory type. Therefore, complexity of an ECC encoding circuit in a chip is reduced, deployment costs of the ECC encoding circuit are reduced, and practicability of the solution is improved.

In other words, the processing system in this application can support various memory types, and does not need to customize a corresponding chip for each memory type. The processing system in this application can naturally support memory media with various redundancy ratios. For example, a DDR5 8+2, a DDR5 8+1, a DDR4 16+2, a DDR4 16+1, an HBM 16+2, an HBM 16+1, a non-standard DDR4 16+3, a DDR4 16+4, and a future storage medium (such as a storage class memory (storage class memory, SCM), a phase change memory (phase change memory, PCM), a solid-state drive (solid-state drive, SSD), and a hard disk drive (hard disk drive, HDD)).

304: The processing system obtains the memory type of the first memory.

Optionally, the memory type of the first memory includes: a DDR5, a DDR4, an HBM, an LPDDR, a memory of a non-JEDEC standard, or the like.

Specifically, the processing system includes the plurality of types of memories, to support writing data into the plurality of types of memories. For example, as shown in FIG. 4, the processing system supports writing data into three types of memories: the DDR5, the DDR4, and the HBM.

305: The processing system writes the first to-be-written data and the first redundant data into the first memory based on the memory type.

The processing system includes the plurality of types of memories, and a data writing manner of each type of memory is different. The processing system implements the ECC encoding on the first to-be-written data according to the process of step 301 to step 303, to obtain the first redundant data. The processing system stores the first to-be-written data and the first redundant data in a cache. The processing system may read the memory type of the first memory. The processing system writes the first to-be-written data and the first redundant data into the first memory based on a data writing manner of the memory type.

For example, the first memory is a DDR5 8+2 x4 DIMM. The processing system transmits 640 bits of data of the first memory to a sending buffer, and organizes the data into a logical data area of 40 columns * 16 rows (that is, a data buffer corresponding to 40 DQ * 16 bursts transmission). Then, the processing system continuously writes the data into the first memory at a time according to a DDR5 JEDEC standard.

For example, the first memory is a DDR5 8+1 x4 DIMM. The processing system transmits 576 bits of data of the first memory to the sending buffer, and organizes the data into a logical data area of 36 columns*16 rows (that is, a data buffer corresponding to 36 DQ * 16 bursts transmission). Then, the processing system continuously writes the data into the first memory at a time according to the DDR5 JEDEC standard.

For example, the first memory is a DDR4 16+2 x4 DIMM. The processing system transmits 576 bits of data of the first memory to the sending buffer, and organizes the data into a logical data area of 72 columns * 8 rows (that is, a data buffer corresponding to 72 DQ * 8 bursts transmission). Then, the processing system continuously writes the data into the first memory at a time according to a DDR4 JEDEC standard.

In a possible implementation, the first redundancy ratio corresponding to the first memory is the ratio of the size of the data memory space in the first memory to the size of the ECC memory space, and the processing system writes the first to-be-written data and the first redundant data into the first memory based on a conventional data writing process.

For example, as shown in FIG. 5A, the processing system writes the first to-be-written data into a data memory device in the first memory, and writes the first redundant data into an ECC memory device in the first memory.

In another possible implementation, the first redundancy ratio corresponding to the first memory is the degraded redundancy ratio corresponding to the first memory. For the degraded redundancy ratio corresponding to the first memory, refer to the foregoing descriptions. In this implementation, the foregoing step 305 specifically includes step 305a to step 305d.

305a: After connecting a redundant bit in the first redundant data to a data bit included in the first to-be-written data, the processing system obtains a first bit sequence.

For example, the first to-be-written data includes 512 bits. As shown in FIG. 6A, the processing system obtains the first redundant data through an encoding process in the foregoing step 301 to step 303. The first redundant data includes 96 ECC bits. After connecting the 96 ECC bits included in the first redundant data to the 512 bits included in the first to-be-written data, the processing system obtains the first bit sequence.

For example, the first to-be-written data includes 512 bits. As shown in FIG. 7A, the processing system obtains the first redundant data through the encoding process in the foregoing step 301 to step 303. The first redundant data includes 64 ECC bits. After connecting the 64 ECC bits included in the first redundant data to the 512 bits included in the first to-be-written data, the processing system obtains the first bit sequence.

305b: The processing system copies a data bit that is in the first bit sequence and that is to be written into the isolated memory space.

For example, as shown in FIG. 6A, the data memory device 3 is the isolated memory space. The first to-be-written data includes 512 bits, and the 97^{th} bit to the 128^{th} bit in the 512 bits are data bits to be stored in the data memory device 3. Therefore, the processing system may copy the 97^{th} bit to the 128^{th} bit in the 512 bits.

For example, as shown in FIG. 7A, the data memory device 3 and the data memory device 4 are the isolated memory spaces. The first to-be-written data includes 512 bits, the 97^{th} bit to the 128^{th} bit in the 512 bits are data bits to be stored in the data memory device 3, and the 129^{th} bit to the 160^{th} bit are data bits to be stored in the data memory device 4. Therefore, the processing system may copy the 97^{th} bit to the 128^{th} bit and the 129^{th} bit to the 160^{th} bit in the 512 bits.

305c: After inserting the data bit that is to be written into the isolated memory space into a last bit in the first bit sequence, the processing system obtains a second bit sequence.

For example, as shown in FIG. 6A, after inserting the 97^{th} bit to the 128^{th} bit in the 512 bits obtained through copying into the last bit in the first bit sequence, the processing system obtains the second bit sequence.

For example, as shown in FIG. 7A, after inserting the 97^{th} bit to the 160^{th} bit in the 512 bits obtained through copying into the last bit in the first bit sequence, the processing system obtains the second bit sequence.

305d: The processing system writes the second bit sequence into the first memory based on a bit sequence of the second bit sequence.

For example, as shown in FIG. 6B, the processing system stores, by using the operations of step 305c to step 305d, the data bits that are in the first to-be-written data and that are to be written into the data memory device 3 in an ECC memory device 19 that is originally used as the ECC memory space. In other words, the ECC memory device 19 is used as a data memory device, and is configured to store the data that is in the first to-be-written data and that is to be written into the data memory device 3. To be specific, the processing system stores the 97^{th} bit to the 128^{th} bit in the first to-be-written data in the ECC memory device 19 that is originally used as the ECC memory space.

For example, as shown in FIG. 7B, the processing system stores, by using the operations of step 305c to step 305d, the data bits that are in the first to-be-written data and that are to be written into the data memory device 3 in an ECC memory device 18 that is originally used as the ECC memory space, and stores the data bits in the data memory device 4 in an ECC memory device 19 that is originally used as the ECC memory space. In other words, the ECC memory device 18 is used as a data memory device, and is configured to store the data that is in the first to-be-written data and that is to be written into the data memory device 3. To be specific, the processing system stores the 97^{th} bit to the 128^{th} bit in the first to-be-written data in the ECC memory device 18 that is originally used as the ECC memory space. The ECC memory device 19 is used as a data memory device, and is configured to store the data that is in the first to-be-written data and that is to be written into the data memory device 4. To be specific, the processing system stores the 129^{th} bit to the 160^{th} bit in the first to-be-written data in the ECC memory device 19 that is originally used as the ECC memory space.

It should be noted that, before the processing system performs degradation processing on the first memory, the processing system needs to re-read all data that is originally stored in the first memory, and perform error detection and error correction on data in the isolated memory space in the first memory, to obtain all correct data bits in the first memory. Then, the processing system performs the ECC encoding on the data bits. A specific encoding process is similar to the process in step 301 to step 303. Then, the processing system writes, according to a process similar to the foregoing step 305a to step 305d, the data bits and the redundant bits obtained through encoding into the first memory. In this way, the isolated memory space is avoided, to facilitate subsequent data reading.

In a process of reading data from the first memory, the processing system reads data from a memory space other than the isolated memory space in the first memory. Then, the processing system performs ECC decoding on the data according to an inverse process of the foregoing data writing process.

In this embodiment of this application, the first to-be-written data is obtained, where the first to-be-written data is the data to be written into the first memory that is in the processing system. The first codeword length based on the first redundancy ratio corresponding to the first memory is determined. Then the ECC encoding is performed on the first to-be-written data based on the first codeword length, to obtain the first redundant data, where the first redundancy ratio is equal to the ratio of the data bit included in the first to-be-written data to the redundant bit included in the first redundant data. The memory type of the first memory is obtained, and the first to-be-written data and the first redundant data are written into the first memory based on the memory type of the first memory. It can be learned that, in the technical solutions of this application, the processing system may determine the first codeword length based on the first redundancy ratio corresponding to the first memory, and perform the ECC encoding on the first to-be-written data based on the first codeword length. In other words, the processing system implements the ECC encoding on the first to-be-written data based on the first redundancy ratio corresponding to the first memory, and does not need to perform the ECC encoding with reference to the memory type of the first memory. The ECC encoding circuit that supports the first redundancy ratio is configured in the processing system, and the ECC encoding circuit that supports the first redundancy ratio is applicable to performing the ECC encoding on the data of the memory with the first redundancy ratio. The processing system does not need to deploy a corresponding ECC encoding circuit for each memory type. Therefore, the complexity of the ECC encoding circuit in the chip is reduced, and the deployment costs of the ECC encoding circuit are reduced.

With reference to an embodiment shown in FIG. 8, the following describes a process in which the processing system determines the first redundancy ratio based on the data memory space, the ECC memory space, and the isolated memory space that are in the first memory.

FIG. 8 is a schematic diagram of another embodiment of a data writing method according to an embodiment of this application. Refer to FIG. 8. The method includes the following steps.

801: Determine an i^{th} intermediate redundancy ratio.

i is an integer greater than or equal to 1. The i^{th} intermediate redundancy ratio corresponds to an i^{th} degraded memory space, and a size of the i^{th} degraded memory space is less than a size of the ECC memory space in the first memory. The i^{th} intermediate redundancy ratio is equal to a ratio of a size of the data memory space in the first memory to a first value, and the first value is equal to the size of the ECC memory space in the first memory minus the size of the i^{th} degraded memory space.

For example, i is equal to 1. The processing system determines that the isolated memory space exists in the first memory, and the processing system may determine a first intermediate redundancy ratio. It may be understood that the processing system may preliminarily determine the first intermediate redundancy ratio for the first memory with reference to an ECC encoding circuit supported by the processing system. The first intermediate redundancy ratio may be understood as a one-level degraded redundancy ratio corresponding to the first memory, and a first degraded memory space is a reduced memory space that is in the first memory and that is used as the ECC memory space. The first intermediate redundancy ratio is less than a ratio of the data memory space in the first memory to the ECC memory space. For example, the ratio of the data memory space in the first memory to the ECC memory space is 4:1, and the processing system determines that the isolated memory space exists in the first memory. The processing system supports the encoding circuit shown in FIG. 4. The processing system may preliminarily determine the first intermediate redundancy ratio for the first memory, for example, the first intermediate redundancy ratio is 16:3.

For example, as shown in FIG. 6A, the data memory device 3 in the first memory is the isolated memory space. The processing system may determine that the first intermediate redundancy ratio is 16:3. That is, the processing system may preliminarily determine the first intermediate redundancy ratio for the first memory.

For example, as shown in FIG. 7A, the data memory device 3 and the data memory device 4 in the first memory space are the isolated memory spaces. The processing system determines that the first intermediate redundancy ratio is 16:3. That is, the processing system may preliminarily determine the first intermediate redundancy ratio for the first memory. The first intermediate redundancy ratio is less than the ratio of the data memory space in the first memory to the ECC memory space.

For example, i is equal to 2. The processing system determines that a size of the isolated memory space is greater than a size of the first degraded memory space, and the processing system continues to reduce the redundancy ratio corresponding to the first memory. The processing system may determine a second intermediate redundancy ratio for the first memory again with reference to the ECC encoding circuit supported by the processing system, where the second intermediate redundancy ratio corresponds to a second degraded memory space. The second intermediate redundancy ratio may be understood as a two-level degraded redundancy ratio corresponding to the first memory, and the second degraded memory space is a reduced memory space that is in the first memory and that is used as the ECC memory space. The second intermediate redundancy ratio is less than the ratio of the data memory space in the first memory to the ECC memory space.

For example, as shown in FIG. 7A, the data memory device 3 and the data memory device 4 in the first memory space are the isolated memory spaces. The first intermediate redundancy ratio is 16:3. The processing system supports the encoding circuit shown in FIG. 4. The processing system may determine the second intermediate redundancy ratio for the first memory again, for example, the second intermediate redundancy ratio is 8:1.

802: Determine whether the size of the isolated memory space is less than or equal to the size of the i^{th} degraded memory space. If yes, perform step 803. If no, perform step 805.

Specifically, the processing system determines whether the isolated memory space in the first memory is less than or equal to the size of the i^{th} degraded memory space. If yes, the processing system performs step 803. If no, the processing system performs step 805.

For example, as shown in FIG. 6A, the isolated memory space in the first memory is the data memory device 3, the size of the first degraded memory space is a size of one memory device, and the size of the isolated memory space is equal to the size of the first degraded memory space. Therefore, the processing system may perform step 803.

For example, as shown in FIG. 7A, the isolated memory spaces in the first memory are the data memory device 3 and the data memory device 4, and the size of the first degraded memory space is a size of two memory devices. The size of the isolated memory space is greater than a size of the second degraded memory space. Therefore, the processing system may perform step 805.

803: Use the i^{th} intermediate redundancy ratio as the first redundancy ratio corresponding to the first memory.

If the size of the isolated memory space is less than or equal to the size of the i^{th} degraded memory space, the processing system may use the i^{th} intermediate redundancy ratio as the first redundancy ratio corresponding to the first memory.

For example, as shown in FIG. 6A, the isolated memory space in the first memory is the data memory device 3, the size of the first degraded memory space is the size of one memory device, and the size of the isolated memory space is equal to the size of the first degraded memory space. Therefore, the processing system may use the first intermediate redundancy ratio 16:3 as the first redundancy ratio corresponding to the first memory.

Optionally, the embodiment shown in FIG. 8 further includes step 804. Step 804 may be performed before step 803.

804: Output an i^{th} piece of warning information.

The i^{th} piece of warning information indicates that the isolated memory space exists in the first memory. Alternatively, the i^{th} piece of warning information indicates that i-level degradation processing is performed on the first memory. The foregoing step 801 to step 803 may be understood as a process in which the processing system performs i^{th} degradation processing on the first memory.

In the foregoing step 804, the processing system may output corresponding warning information each time the processing system perform one-level degradation processing. In this way, a user is reminded that the isolated memory space appears in the first memory, and the user can find a problem of the first memory in time. Therefore, stability of the system is further ensured.

It should be noted that, optionally, if the i^{th} intermediate redundancy ratio is equal to 0, the i^{th} piece of warning information further indicates to replace the first memory. When the i^{th} intermediate redundancy ratio is equal to 0, it indicates that there is no space that can be used as an ECC memory in the first memory, in other words, a memory space that needs to be isolated in the first memory is greater than or equal to a space that is originally used as the ECC memory in the first memory. The processing system may remind, by using the i^{th} piece of warning information, the user that the first memory no more has an ECC function and the first memory needs to be replaced in time. A problem that the system is unstable because the ECC encoding cannot be performed on the data is avoided.

805: Determine whether a preset condition is met. If yes, perform step 806. If no, perform step 807.

Specifically, the processing system determines whether the preset condition is met. If yes, step 806 is performed. If no, step 807 is performed.

In a possible implementation, the processing system determines whether the i^{th} intermediate redundancy ratio is equal to 0. If yes, the processing system may perform step 806. If no, the processing system may perform step 807.

In this implementation, if the i^{th} intermediate redundancy ratio is equal to 0, it indicates that there is no available ECC memory space in the first memory after i times of degradation processing of the processing system, or that an original ECC memory space in the first memory is used to store data of the isolated memory space, and there is no redundant memory space that can be used to store an ECC bit. Therefore, the processing system cannot perform the ECC encoding on the first to-be-written data. The processing system may perform step 806.

In another possible implementation, the processing system determines whether i is greater than or equal to a preset threshold. If yes, the processing system may perform step 806. If no, the processing system may perform step 807.

For example, if the processing system performs four times of degradation processing on the first memory, the processing system may perform step 806. Otherwise, the processing system performs step 807.

806: Quit a loop.

In this implementation, the processing system quits the loop. The processing system does not perform the ECC encoding on the first to-be-written data.

807: Update i, and then start a loop process of performing step 801 to step 805.

Specifically, the processing system updates a value of i, where i is equal to i plus 1. Then, the processing system performs a process similar to the foregoing step 801 to step 805, in other words, the processing system performs (i+1)^{th} degradation processing on the first memory.

The following briefly describes the process in which the processing system performs the (i+1)^{th} degradation processing on the first memory.

The processing system determines an (i+1)^{th} intermediate redundancy ratio, where the (i+1)^{th} intermediate redundancy ratio corresponds to an (i+1)^{th} degraded memory space, and a size of the (i+1)^{th} degraded memory space is less than the size of the ECC memory space in the first memory. The (i+1)^{th} intermediate redundancy ratio is equal to a ratio of the size of the data memory space in the first memory to a second value, and the second value is equal to the size of the ECC memory space in the first memory minus the size of the (i+1)^{th} degraded memory space. The processing system determines that the size of the isolated memory space is less than or equal to the size of the second degraded memory space. If yes, the processing system uses the (i+1)^{th} intermediate redundancy ratio as the first redundancy ratio. If no, the processing system determines whether the preset condition is met, if the preset condition is met, the processing system quits the loop; or if the preset condition is not met, the processing system updates i again, and starts the loop process of performing step 801 to step 805.

If the size of the isolated memory space is greater than the size of the i^{th} degraded memory space, the processing system may determine the (i+1)^{th} intermediate redundancy ratio for the first memory again with reference to the ECC encoding circuit supported by the processing system. The (i+1)^{th} intermediate redundancy ratio may be understood as an (i+1)^{th} degraded redundancy ratio corresponding to the first memory, and the (i+1)^{th} degraded memory space is the reduced memory space that is in the first memory and that is used as the ECC memory space.

For example, as shown in FIG. 7A, the data memory device 3 and the data memory device 4 are the isolated memory spaces, and the processing system supports an ECC encoding circuit whose redundancy ratio is 8:1. The processing system may determine the second intermediate redundancy ratio for the first memory. The second intermediate redundancy ratio corresponds to the second degraded memory space. The size of the second degraded memory space is the size of two memory devices. The size of the isolated memory space is equal to the size of the second degraded memory space. Therefore, the processing system may use the (i+1)^{th} intermediate redundancy ratio as the first redundancy ratio.

Optionally, the size of the first degraded memory space is greater than a difference between the size of the first degraded memory space and the size of the second degraded memory space.

Optionally, a difference between the size of the i^{th} degraded memory space and the size of the (i+1)^{th} degraded memory space is greater than or equal to a difference between the size of the (i+1)^{th} degraded memory space and a size of an (i+2)^{th} degraded memory space.

For example, as shown in FIG. 7A, the processing system performs three times of degradation processing on the first memory. Specifically, the processing system preliminarily determines a first intermediate redundancy ratio for the first memory, where the first intermediate redundancy ratio is 16:3. A size of a first degraded memory space corresponding to the first intermediate redundancy ratio is a memory space of one memory device. The processing system determines a second intermediate redundancy ratio for the first memory, where the second intermediate redundancy ratio is 32:5, and a second degraded memory space corresponding to the second intermediate redundancy ratio is the memory space of one memory device plus a memory space of a half memory device. The processing system determines a third intermediate redundancy ratio for the first memory, where the third intermediate redundancy ratio is 16:2, and a third degraded memory space corresponding to the third intermediate redundancy ratio is a memory space of two memory devices. Therefore, it can be learned that the difference between the size of the first degraded memory space and the size of the second degraded memory space is equal to a size of the memory space of the half memory device. A difference between the size of the second degraded memory space and that of the third degraded memory space is equal to the size of the memory space of the half memory device. Therefore, it can be learned that the size of the first degraded memory space is greater than the difference between the size of the first degraded memory space and the size of the second degraded memory space. The difference between the size of the first degraded memory space and the size of the second degraded memory space is equal to the difference between the size of the second degraded memory space and the third degraded memory space.

For example, as shown in FIG. 9, the processing system performs fourth times of degradation processing on the first memory. Specifically, the processing system preliminarily determines a first intermediate redundancy ratio for the first memory, where the first intermediate redundancy ratio is 16:3. A size of a first degraded memory space corresponding to the first intermediate redundancy ratio is a memory space of one memory device. The processing system determines a second intermediate redundancy ratio for the first memory, where the second intermediate redundancy ratio is 16:2. A second degraded memory space corresponding to the second intermediate redundancy ratio is a memory space of two memory devices. The processing system determines a third intermediate redundancy ratio for the first memory, where the third intermediate redundancy ratio is 32:3, and a third degraded memory space corresponding to the third intermediate redundancy ratio is the memory space of two memory devices plus a memory space of a half memory device. The processing system determines a fourth intermediate redundancy ratio for the first memory, where the fourth intermediate redundancy ratio is 16:1, and a fourth degraded memory space corresponding to the fourth intermediate redundancy ratio is a memory space of three memory devices. Therefore, a difference between the first degraded memory space and the second degraded memory space is the memory space of one memory device. A difference between the second degraded memory space and the third degraded memory space is the memory space of the half memory device. The difference between the first degraded memory space and the second degraded memory space is greater than the difference between the second degraded memory space and the third degraded memory space.

It can be learned that the processing system may first preliminarily determine the i^{th} intermediate redundancy ratio for the first memory. Then, the processing system determines whether the size of the isolated memory space is less than or equal to the size of the i^{th} degraded memory space. To be specific, the processing system performs degradation processing on the first memory, in other words, reduces the memory space that is in the first memory and that is used as the ECC memory space. Then, the processing system determines whether a size of a reduced ECC memory space is greater than or equal to the size of the isolated memory space. The processing system reduces the redundancy ratio corresponding to the first memory step by step, to help to select a proper redundancy ratio for the first memory, and help select a redundancy ratio supported by the processing system to perform the ECC encoding on the first to-be-written data, so as to reduce complexity of an ECC encoding circuit in a chip and reduce deployment costs of the ECC encoding circuit.

The foregoing describes the data writing method in embodiments of this application. The following describes the processing system in embodiments of this application.

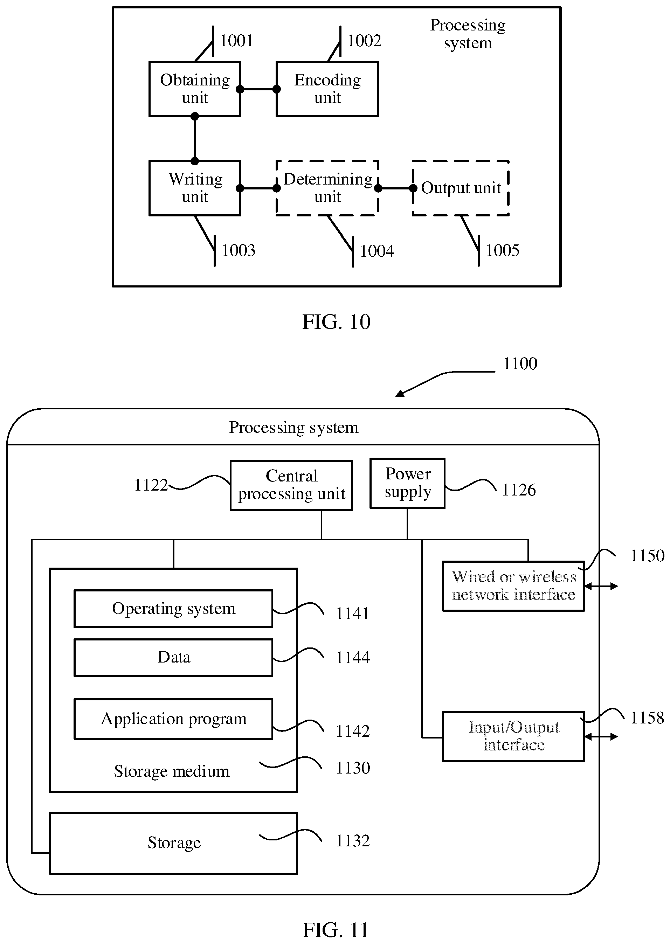

FIG. 10 is a schematic diagram of a structure of the processing system according to an embodiment of this application. The processing system includes an obtaining unit 1001, an encoding unit 1002, and a writing unit 1003. The processing system further includes a determining unit 1004 and an output unit 1005.

The obtaining unit 1001 is configured to obtain first to-be-written data, where the first to-be-written data is data to be written into a first memory in the processing system.

The encoding unit 1002 is configured to determine a first codeword length based on a first redundancy ratio corresponding to the first memory; and perform ECC encoding on the first to-be-written data based on the first codeword length, to obtain first redundant data, where the first redundancy ratio is equal to a ratio of a data bit included in the first to-be-written data to a redundant bit included in the first redundant data, where
the obtaining unit 1001 is further configured to obtain a memory type of the first memory.

The writing unit 1003 is configured to write the first to-be-written data and the first redundant data into the first memory based on the memory type of the first memory.

In a possible implementation, the processing system further includes the determining unit 1004, where
the determining unit is configured to determine the first redundancy ratio corresponding to the first memory.

In another possible implementation, the determining unit 1004 is specifically configured to:
determine the first redundancy ratio based on a data memory space in the first memory and an ECC memory space in the first memory.

In another possible implementation, the determining unit 1004 is specifically configured to:
use a ratio of a size of the data memory space to a size of the ECC memory space as the first redundancy ratio.

In another possible implementation, the determining unit 1004 is specifically configured to:
determine the first redundancy ratio based on the data memory space, the ECC memory space, and an isolated memory space that are in the first memory.

In another possible implementation, the determining unit 1004 is specifically configured to:
determine an i^{th} intermediate redundancy ratio, where the i^{th} intermediate redundancy ratio corresponds to an i^{th} degraded memory space, the i^{th} intermediate redundancy ratio is equal to a ratio of a size of the data memory space to a first value, the first value is equal to a size of the ECC memory space minus a size of the i^{th} degraded memory space, and i is an integer greater than or equal to 1; determine whether a size of the isolated memory space is less than or equal to the size of the i^{th} degraded memory space; and if yes, use the i^{th} intermediate redundancy ratio as the first redundancy ratio.

In another possible implementation, the processing system further includes the output unit 1005, where
the output unit is configured to output an i^{th} piece of warning information, where the i^{th} piece of warning information indicates that the isolated memory space appears in the first memory.

In another possible implementation, if the i^{th} intermediate redundancy ratio is equal to 0, the i^{th} piece of warning information further indicates to replace the first memory.

In another possible implementation, if the size of the isolated memory space is equal to the size of the i^{th} degraded memory space, the determining unit 1004 is further configured to:
determine an (i+1)^{th} intermediate redundancy ratio, where the (i+1)^{th} intermediate redundancy ratio corresponds to an (i+1)^{th} degraded memory space, the (i+1)^{th} intermediate redundancy ratio is equal to a ratio of the size of the data memory space to a second value, and the second value is equal to the size of the ECC memory space minus a size of the (i+1)^{th} degraded memory space;
determine whether the size of the isolated memory space is less than or equal to the size of the (i+1)^{th} degraded memory space; and if yes, use the (i+1)^{th} intermediate redundancy ratio as the first redundancy ratio.

In another possible implementation, the output unit 1005 is further configured to:
output an (i+1)^{th} piece of warning information, where the (i+1)^{th} piece of warning information indicates that the isolated memory space appears in the first memory.

In another possible implementation, a difference between the size of the i^{th} degraded memory space and the size of the (i+1)^{th} degraded memory space is greater than or equal to a difference between the size of the (i+1)^{th} degraded memory space and a size of an (i+2)^{th} degraded memory space.

In another possible implementation, the determining unit 1004 is further configured to:
read a recorded first redundancy ratio corresponding to the first memory.

In another possible implementation, the writing unit 1003 is specifically configured to:
connect the redundant bit in the first redundant data to the data bit included in the first to-be-written data, to obtain a first bit sequence; copy a data bit that is in the first bit sequence and that is to be written into the isolated memory space; connect the data bit that is to be written into the isolated memory space to a last bit in the first bit sequence, to obtain a second bit sequence; and write the second bit sequence into the first memory based on a bit sequence of the second bit sequence.

Refer to FIG. 11. A processing system 1100 may greatly differ due to different configurations or performance, and may include one or more central processing units (central processing units, CPUs) 1122 (for example, one or more processors) and one or more storages 1132. One or more storage media 1130 (for example, one or more mass storage devices) storing an application program 1142 or data 1144.

The storage 1132 and the storage medium 1130 may be transient storage or persistent storage. The program stored in the storage medium 1130 may include one or more modules (not shown in the figure). Each module may include a series of instruction operations for the processing system. Further, the central processing unit 1122 may be set to communicate with the storage medium 1130, and executes, on the processing system 1100, the series of instruction operations in the storage medium 1130.

The processing system 1100 may further include one or more power supplies 1126, one or more wired or wireless network interfaces 1150, one or more input/output interfaces 1158, and/or one or more operating systems 1141, for example, a Microsoft operating system or an Apple operating system.

The specific steps in FIG. 3 and FIG. 8 in the foregoing embodiment may be performed based on a structure of the processing system shown in FIG. 11. The central processing unit 1122 is configured to perform the following solution:
obtaining first to-be-written data, where the first to-be-written data is data to be written into a first memory in the processing system; determining a first codeword length based on a first redundancy ratio corresponding to the first memory; performing ECC encoding on the first to-be-written data based on the first codeword length, to obtain first redundant data, where the first redundancy ratio is equal to a ratio of a data bit included in the first to-be-written data to a redundant bit included in the first redundant data; obtaining a memory type of the first memory; and writing the first to-be-written data and the first redundant data into the first memory based on the memory type of the first memory.

In a possible implementation, the central processing unit 1122 is further configured to:
determine the first redundancy ratio corresponding to the first memory.

In another possible implementation, the central processing unit 1122 is specifically configured to:
determine the first redundancy ratio based on a data memory space in the first memory and an ECC memory space in the first memory.

In another possible implementation, the central processing unit 1122 is specifically configured to:
use a ratio of a size of the data memory space to a size of the ECC memory space as the first redundancy ratio.

In another possible implementation, the central processing unit 1122 is specifically configured to:
determine the first redundancy ratio based on the data memory space, the ECC memory space, and an isolated memory space that are in the first memory.

In another possible implementation, the central processing unit 1122 is specifically configured to:
determine an i^{th} intermediate redundancy ratio, where the i^{th} intermediate redundancy ratio corresponds to an i^{th} degraded memory space, the i^{th} intermediate redundancy ratio is equal to a ratio of a size of the data memory space to a first value, the first value is equal to a size of the ECC memory space minus a size of the i^{th} degraded memory space, and i is an integer greater than or equal to 1; determine whether a size of the isolated memory space is less than or equal to the size of the i^{th} degraded memory space; and if yes, use the i^{th} intermediate redundancy ratio as the first redundancy ratio.

In another possible implementation, the central processing unit 1122 is further configured to:
output an i^{th} piece of warning information, where the i^{th} piece of warning information indicates that the isolated memory space appears in the first memory.

In another possible implementation, if the i^{th} intermediate redundancy ratio is equal to 0, the i^{th} piece of warning information further indicates to replace the first memory.

In another possible implementation, if the size of the isolated memory space is equal to the size of the i^{th} degraded memory space, the central processing unit 1122 is further configured to:
determine an (i+1)^{th} intermediate redundancy ratio, where the (i+1)^{th} intermediate redundancy ratio corresponds to an (i+1)^{th} degraded memory space, the (i+1)^{th} intermediate redundancy ratio is equal to a ratio of the size of the data memory space to a second value, and the second value is equal to the size of the ECC memory space minus a size of the (i+1)^{th} degraded memory space;
determine whether the size of the isolated memory space is less than or equal to the size of the (i+1)^{th} degraded memory space; and if yes, use the (i+1)^{th} intermediate redundancy ratio as the first redundancy ratio.

In another possible implementation, the central processing unit 1122 is further configured to:
output an (i+1)^{th} piece of warning information, where the (i+1)^{th} piece of warning information indicates that the isolated memory space appears in the first memory.

In another possible implementation, a difference between the size of the i^{th} degraded memory space and the size of the (i+1)^{th} degraded memory space is greater than or equal to a difference between the size of the (i+1)^{th} degraded memory space and a size of an (i+2)^{th} degraded memory space.

In another possible implementation, the central processing unit 1122 is further configured to:
read a recorded first redundancy ratio corresponding to the first memory.

In another possible implementation, the central processing unit 1122 is further configured to:
connect the redundant bit in the first redundant data to the data bit included in the first to-be-written data, to obtain a first bit sequence; copy a data bit that is in the first bit sequence and that is to be written into the isolated memory space; connect the data bit that is to be written into the isolated memory space to a last bit in the first bit sequence, to obtain a second bit sequence; and write the second bit sequence into the first memory based on a bit sequence of the second bit sequence.

An embodiment of this application further provides a computer program product including instructions. When the computer program product runs on a computer, the computer is enabled to perform the data writing methods in embodiments shown in FIG. 3 and FIG. 8.

An embodiment of this application further provides a computer-readable storage medium including instructions. When the instructions are run on a computer, the computer is enabled to perform the data writing methods in embodiments shown in FIG. 3 and FIG. 8.

In another possible design, when the processing system is a chip in a terminal, the chip includes a processing unit and a communication unit, where the processing unit may be, for example, a processor, and the communication unit may be, for example, an input/output interface, a pin, or a circuit. The processing unit may execute computer-executable instructions stored in a storage unit, so that the chip in the terminal performs the data writing methods in embodiments shown in FIG. 3 and FIG. 8. Optionally, the storage unit is a storage unit in the chip, for example, a register or a cache. The storage unit may alternatively be a storage unit that is outside the chip and that is in the terminal, for example, a read-only memory (read-only memory, ROM) or another type of static storage device that can store static information and instructions, or a random access memory (random access memory, RAM).

The processor mentioned in any of the foregoing may be a general central processing unit, a microprocessor, an application-specific integrated circuit (application-specific integrated circuit, ASIC), or one or more of integrated circuits configured to control program execution of the data writing methods in embodiments shown in FIG. 3 and FIG. 8.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in another manner. For example, the described apparatus embodiment is merely an example. For example, division into the units is merely logical function division and there may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

The units described as separate parts may or may not be physically separate, and parts displayed as units may or may not be physical units, may be located in one position, or may be distributed on a plurality of network units. A part of or all of the units may be selected based on actual requirements to achieve objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to a conventional technology, or all or a part of the technical solutions may be implemented in a form of a software product. The computer software product is stored in a storage medium and includes several instructions for instructing a computer device (which may be a personal computer, a server, a network device, or the like) to perform all or a part of the steps of the methods described in embodiments of this application. The foregoing storage medium includes any medium that can store program code, such as a USB flash drive, a removable hard disk drive, a ROM, a RAM, a magnetic disk, or an optical disc.

In conclusion, the foregoing embodiments are merely intended for describing the technical solutions of this application, but not for limiting the present invention. Although this application is described in detail with reference to the foregoing embodiments, a person of ordinary skilled in the art needs to understand that modifications may still be made to the technical solutions described in the foregoing embodiments or equivalent replacements may be made to some technical features, and such modifications or replacements do not cause the essence of the corresponding technical solutions to depart from scope of the attached claims.

## Claims

1. A data writing method, wherein the method is applied to a processing system (1100), the processing system (1100) comprises a plurality of types of memories, and the method comprises:
obtaining (301) first to-be-written data, wherein the first to-be-written data is data to be written into a first memory in the processing system (1100);
determining (302) a first codeword length based on a first redundancy ratio corresponding to the first memory;
performing (303) error correction code, ECC, encoding on the first to-be-written data based on the first codeword length, to obtain first redundant data, wherein the first redundancy ratio is equal to a ratio (16) of a quantity of data bits comprised in the first to-be-written data to a quantity of redundant bits comprised in the first redundant data;
obtaining (304) a memory type of the first memory;
writing (305) the first to-be-written data and the first redundant data into the first memory based on the memory type;
wherein before the determining (302) a first codeword length based on a first redundancy ratio corresponding to the first memory, the method further comprises:
determining (302a) the first redundancy ratio corresponding to the first memory; and
the data writing method being **characterised in that**:
the determining (302a) the first redundancy ratio corresponding to the first memory comprises:
determining the first redundancy ratio based on a data memory space in the first memory and an ECC memory space in the first memory.

2. The method according to claim 1, wherein the determining the first redundancy ratio based on a data memory space in the first memory and an ECC memory space in the first memory comprises:
using a ratio (16) of a size of the data memory space to a size of the ECC memory space as the first redundancy ratio.

3. A data writing method, wherein the method is applied to a processing system (1100), the processing system (1100) comprises a plurality of types of memories, and the method comprises:
obtaining (301) first to-be-written data, wherein the first to-be-written data is data to be written into a first memory in the processing system (1100);
determining (302) a first codeword length based on a first redundancy ratio corresponding to the first memory;
performing (303) error correction code, ECC, encoding on the first to-be-written data based on the first codeword length, to obtain first redundant data, wherein the first redundancy ratio is equal to a ratio (16) of a quantity of data bits comprised in the first to-be-written data to a quantity of redundant bits comprised in the first redundant data;
obtaining (304) a memory type of the first memory;
writing (305) the first to-be-written data and the first redundant data into the first memory based on the memory type;
wherein before the determining (302) a first codeword length based on a first redundancy ratio corresponding to the first memory, the method further comprises:
determining (302a) the first redundancy ratio corresponding to the first memory; and
the data writing method being **characterised in that**:
the determining (302) the first redundancy ratio corresponding to the first memory comprises:
determining the first redundancy ratio based on a data memory space, an ECC memory space, and an isolated memory space that are in the first memory.

4. The method according to claim 3, wherein the determining the first redundancy ratio based on the data memory space, the ECC memory space, and an isolated memory space that are in the first memory comprises:
determining (801) an i^{th} intermediate redundancy ratio (16), wherein the i^{th} intermediate redundancy ratio (16) corresponds to an i^{th} degraded memory space, the i^{th} intermediate redundancy ratio (16) is equal to a ratio (16) of a size of the data memory space to a first value, the first value is equal to a size of the ECC memory space minus a size of the i^{th} degraded memory space, and i is an integer greater than or equal to 1;
determining (802) whether a size of the isolated memory space is less than or equal to the size of the i^{th} degraded memory space; and
if yes, using (803) the i^{th} intermediate redundancy ratio (16) as the first redundancy ratio.

5. The method according to claim 4, further comprising:
outputting (804) an i^{th} piece of warning information, wherein the i^{th} piece of warning information indicates that the isolated memory space appears in the first memory.

6. The method according to claim 4 or 5, wherein if the size of the isolated memory space is equal to the size of the i^{th} degraded memory space, the method further comprises:
determining an (i+1)^{th} intermediate redundancy ratio (16), wherein the (i+1)^{th} intermediate redundancy ratio (16) corresponds to an (i+1)^{th} degraded memory space, the (i+1)^{th} intermediate redundancy ratio (16) is equal to a ratio (16) of the size of the data memory space to a second value, and the second value is equal to the size of the ECC memory space minus a size of the (i+1)^{th} degraded memory space;
determining whether the size of the isolated memory space is less than or equal to the size of the (i+1)^{th} degraded memory space; and
if yes, using the (i+1)^{th} intermediate redundancy ratio (16) as the first redundancy ratio.

7. The method according to claim 6, further comprising:
outputting an (i+1)^{th} piece of warning information, wherein the (i+1)^{th} piece of warning information indicates that the isolated memory space appears in the first memory.

8. The method according to claim 7, wherein if the (i+1)^{th} intermediate redundancy ratio (16) is equal to 0, the (i+1)^{th} piece of warning information further indicates to replace the first memory.

9. The method according to any one of claims 6 to 8, wherein a difference between the size of the i^{th} degraded memory space and the size of the (i+1)^{th} degraded memory space is greater than or equal to a difference between the size of the (i+1)^{th} degraded memory space and a size of an (i+2)^{th} degraded memory space.

10. A processing system (1100), wherein the processing system (1100) comprises a memory controller and a plurality of types of memories, and the memory controller is configured to perform the method according to any one of claims 1 to 9.

11. A processing system (1100), comprising:
a storage (1132), configured to store a program (1142); and
a processor, configured to execute the program (1142) stored in the storage (1132), wherein when the program (1142) is executed, the processor is configured to perform the method according to any one of claims 1 to 9.

12. A computer-readable storage medium, comprising computer instructions, wherein when the computer instructions are run on a computer, the computer is enabled to perform the method according to any one of claims 1 to 9.

## Patentansprüche

1. Datenschreibverfahren, wobei das Verfahren auf ein Verarbeitungssystem (1100) angewendet wird, das Verarbeitungssystem (1100) eine Vielzahl von Speichertypen umfasst, und das Verfahren Folgendes umfasst:
Erlangen (301) erster zu schreibender Daten, wobei die ersten zu schreibenden Daten Daten sind, die in einen ersten Speicher in dem Verarbeitungssystem (1100) zu schreiben sind;
Bestimmen (302) einer ersten Codewortlänge basierend auf einem ersten Redundanzverhältnis entsprechend dem ersten Speicher;
Durchführen (303) einer Fehlerkorrekturcode-Codierung, ECC-Codierung, an den ersten zu schreibenden Daten basierend auf der ersten Codewortlänge, um erste redundante Daten zu erlangen, wobei das erste Redundanzverhältnis gleich einem Verhältnis (16) einer Menge von Datenbits, die in den ersten zu schreibenden Daten enthalten sind, zu einer Menge von redundanten Bits, die in den ersten redundanten Daten enthalten sind, ist;
Erlangen (304) eines Speichertyps des ersten Speichers;
Schreiben (305) der ersten zu schreibenden Daten und der ersten redundanten Daten in den ersten Speicher basierend auf dem Speichertyp;
wobei das Verfahren von dem Bestimmen (302) einer ersten Codewortlänge basierend auf einem ersten Redundanzverhältnis entsprechend dem ersten Speicher ferner Folgendes umfasst:
Bestimmen (302a) des ersten Redundanzverhältnisses entsprechend dem ersten Speicher; und
wobei das Datenschreibverfahren **dadurch gekennzeichnet ist, dass**:
das Bestimmen (302a) des ersten Redundanzverhältnisses entsprechend dem ersten Speicher Folgendes umfasst:
Bestimmen des ersten Redundanzverhältnisses basierend auf einem Datenspeicherspatz in dem ersten Speicher und einem ECC-Speicherplatz in dem ersten Speicher.

2. Verfahren nach Anspruch 1, wobei das Bestimmen des ersten Redundanzverhältnisses basierend auf einem Datenspeicherplatz in dem ersten Speicher und einem ECC-Speicherplatz in dem ersten Speicher Folgendes umfasst:
Verwenden eines Verhältnisses (16) von einer Größe des Datenspeicherplatzes zu einer Größe des ECC-Speicherplatzes als das erste Redundanzverhältnis.

3. Datenschreibverfahren, wobei das Verfahren auf ein Verarbeitungssystem (1100) angewendet wird, das Verarbeitungssystem (1100) eine Vielzahl von Speichertypen umfasst, und das Verfahren Folgendes umfasst:
Erlangen (301) erster zu schreibender Daten, wobei die ersten zu schreibenden Daten Daten sind, die in einen ersten Speicher in dem Verarbeitungssystem (1100) zu schreiben sind;
Bestimmen (302) einer ersten Codewortlänge basierend auf einem ersten Redundanzverhältnis entsprechend dem ersten Speicher;
Durchführen (303) einer Fehlerkorrekturcode-Codierung, ECC-Codierung, an den ersten zu schreibenden Daten basierend auf der ersten Codewortlänge, um erste redundante Daten zu erlangen, wobei das erste Redundanzverhältnis gleich einem Verhältnis (16) einer Menge von Datenbits, die in den ersten zu schreibenden Daten enthalten sind, zu einer Menge von redundanten Bits, die in den ersten redundanten Daten enthalten sind, ist;
Erlangen (304) eines Speichertyps des ersten Speichers;
Schreiben (305) der ersten zu schreibenden Daten und der ersten redundanten Daten in den ersten Speicher basierend auf dem Speichertyp;
wobei das Verfahren von dem Bestimmen (302) einer ersten Codewortlänge basierend auf einem ersten Redundanzverhältnis entsprechend dem ersten Speicher ferner Folgendes umfasst:
Bestimmen (302a) des ersten Redundanzverhältnisses entsprechend dem ersten Speicher; und
wobei das Datenschreibverfahren **dadurch gekennzeichnet ist, dass**:
das Bestimmen (302) des ersten Redundanzverhältnisses entsprechend dem ersten Speicher Folgendes umfasst:
Bestimmen des ersten Redundanzverhältnisses basierend auf einem Datenspeicherplatz, einem ECC-Speicherplatz und einem isolierten Speicherplatz, die in dem ersten Speicher liegen.

4. Verfahren nach Anspruch 3, wobei das Bestimmen des ersten Redundanzverhältnisses basierend auf dem Datenspeicherplatz, dem ECC-Speicherplatz und einem isolierten Speicherplatz, die in dem ersten Speicher liegen, Folgendes umfasst:
Bestimmen (801) eines i-ten Zwischenredundanzverhältnisses (16), wobei das i-te Zwischenredundanzverhältnis (16) einem i-ten degradierten Speicherplatz entspricht, das i-te Zwischenredundanzverhältnis (16) gleich einem Verhältnis (16) einer Größe des Datenspeicherplatzes zu einem ersten Wert ist, der erste Wert gleich einer Größe des ECC-Speicherplatzes minus einer Größe des i-ten degradierten Speicherplatzes ist, und i eine ganze Zahl größer oder gleich 1 ist;
Bestimmen (802), ob eine Größe des isolierten Speicherplatzes kleiner oder gleich der Größe des i-ten degradierten Speicherplatzes ist; und
wenn ja, Verwenden (803) des i-ten Zwischenredundanzverhältnisses (16) als das erste Redundanzverhältnis.

5. Verfahren nach Anspruch 4, ferner umfassend:
Ausgeben (804) einer i-ten Warninformation, wobei die i-te Warninformation anzeigt, dass der isolierte Speicherplatz in dem ersten Speicher erscheint.

6. Verfahren nach Anspruch 4 oder 5, wobei, wenn die Größe des isolierten Speicherplatzes gleich der Größe des i-ten degradierten Speicherplatzes ist, das Verfahren ferner Folgendes umfasst:
Bestimmen eines (i+1)-ten Zwischenredundanzverhältnisses (16), wobei das (i+1)-te Zwischenredundanzverhältnis (16) einem (i+1)-ten degradierten Speicherplatz entspricht, das (i+1)-te Zwischenredundanzverhältnis (16) gleich einem Verhältnis (16) der Größe des Datenspeicherplatzes zu einem zweiten Wert ist, und der zweite Wert gleich der Größe des ECC-Speicherplatzes minus einer Größe des (i+1)-ten degradierten Speicherplatzes ist;
Bestimmen, ob die Größe des isolierten Speicherplatzes kleiner oder gleich der Größe des (i+1)-ten degradierten Speicherplatzes ist; und
wenn ja, Verwenden des (i+1)-ten Zwischenredundanzverhältnisses (16) als das erste Redundanzverhältnis.

7. Verfahren nach Anspruch 6, ferner umfassend:
Ausgeben einer (i+1)-ten Warninformation, wobei die (i+1)-te Warninformation anzeigt, dass der isolierte Speicherplatz in dem ersten Speicher erscheint.

8. Verfahren nach Anspruch 7, wobei, wenn das (i+1)-te Zwischenredundanzverhältnis (16) gleich 0 ist, die (i+1)-te Warninformation ferner anweist, den ersten Speicher zu ersetzen.

9. Verfahren nach einem der Ansprüche 6 bis 8, wobei eine Differenz zwischen der Größe des i-ten degradierten Speicherplatzes und der Größe des (i+1)-ten degradierten Speicherplatzes größer oder gleich einer Differenz zwischen der Größe des (i+1)-ten degradierten Speicherplatzes und einer Größe eines (i+2)-ten degradierten Speicherplatzes ist.

10. Verarbeitungssystem (1100), wobei das Verarbeitungssystem (1100) eine Speichersteuerung und eine Vielzahl von Speichertypen umfasst, und die Speichersteuerung dazu konfiguriert ist, das Verfahren nach einem der Ansprüche 1 bis 9 durchzuführen.

11. Verarbeitungssystem (1100), umfassend:
einen Speicher (1132), der dazu konfiguriert ist, ein Programm (1142) zu speichern; und
einen Prozessor, der dazu konfiguriert ist, das Programm (1142), das in dem Speicher (1132) gespeichert ist, auszuführen, wobei, wenn das Programm (1142) ausgeführt wird, der Prozessor dazu konfiguriert ist, das Verfahren nach einem der Ansprüche 1 bis 9 durchzuführen.

12. Computerlesbares Speichermedium, umfassend Computeranweisungen, wobei, wenn die Computeranweisungen auf einem Computer ausgeführt werden, der Computer in die Lage versetzt wird, das Verfahren nach einem der Ansprüche 1 bis 9 durchzuführen.

## Revendications

1. Procédé d'écriture de données, dans lequel le procédé est appliqué à un système de traitement (1100), le système de traitement (1100) comprend une pluralité de types de mémoires, et le procédé comprend :
l'obtention (301) de premières données à écrire, dans lequel les premières données à écrire sont des données à écrire dans une première mémoire du système de traitement (1100) ;
la détermination (302) d'une première longueur de mot de code sur la base d'un premier taux de redondance correspondant à la première mémoire ;
la réalisation (303) d'un encodage de code de correction d'erreurs, ECC, sur les premières données à écrire sur la base de la première longueur de mot de code, pour obtenir des premières données redondantes, dans lequel le premier taux de redondance est égal à un taux (16) d'une quantité de bits de données compris dans les premières données à écrire à une quantité de bits redondants compris dans les premières données redondantes ;
l'obtention (304) d'un type de mémoire de la première mémoire ;
l'écriture (305) des premières données à écrire et des premières données redondantes dans la première mémoire sur la base du type de mémoire ;
dans lequel, avant la détermination (302) d'une première longueur de mot de code sur la base d'un premier taux de redondance correspondant à la première mémoire, le procédé comprend en outre :
la détermination (302a) du premier taux de redondance correspondant à la première mémoire ; et
le procédé d'écriture de données étant **caractérisé en ce que** :
la détermination (302a) du premier taux de redondance correspondant à la première mémoire comprend :
la détermination du premier taux de redondance sur la base d'un espace mémoire de données dans la première mémoire et d'un espace mémoire ECC dans la première mémoire.

2. Procédé selon la revendication 1, dans lequel la détermination du premier taux de redondance sur la base d'un espace mémoire de données dans la première mémoire et d'un espace mémoire ECC dans la première mémoire comprend :
l'utilisation d'un taux (16) d'une taille de l'espace mémoire de données à une taille de l'espace mémoire ECC comme premier taux de redondance.

3. Procédé d'écriture de données, dans lequel le procédé est appliqué à un système de traitement (1100), le système de traitement (1100) comprend une pluralité de types de mémoires, et le procédé comprend :
l'obtention (301) de premières données à écrire, dans lequel les premières données à écrire sont des données à écrire dans une première mémoire du système de traitement (1100) ;
la détermination (302) d'une première longueur de mot de code sur la base d'un premier taux de redondance correspondant à la première mémoire ;
la réalisation (303) d'un encodage de code de correction d'erreurs, ECC, sur les premières données à écrire sur la base de la première longueur de mot de code, pour obtenir des premières données redondantes, dans lequel le premier taux de redondance est égal à un taux (16) d'une quantité de bits de données compris dans les premières données à écrire à une quantité de bits redondants compris dans les premières données redondantes ;
l'obtention (304) d'un type de mémoire de la première mémoire ;
l'écriture (305) des premières données à écrire et des premières données redondantes dans la première mémoire sur la base du type de mémoire ;
dans lequel, avant la détermination (302) d'une première longueur de mot de code sur la base d'un premier taux de redondance correspondant à la première mémoire, le procédé comprend en outre :
la détermination (302a) du premier taux de redondance correspondant à la première mémoire ; et
le procédé d'écriture de données étant **caractérisé en ce que** :
la détermination (302) du premier taux de redondance correspondant à la première mémoire comprend :
la détermination du premier taux de redondance sur la base d'un espace mémoire de données, d'un espace mémoire ECC, et d'un espace mémoire isolé qui sont dans la première mémoire.

4. Procédé selon la revendication 3, dans lequel la détermination du premier taux de redondance sur la base de l'espace mémoire de données, de l'espace mémoire ECC et d'un espace mémoire isolé qui sont dans la première mémoire comprend :
la détermination (801) d'un i^{ème} taux de redondance intermédiaire (16), dans lequel le i^{ème} taux de redondance intermédiaire (16) correspond à un i^{ème} espace mémoire dégradé, le i^{ème} taux de redondance intermédiaire (16) est égal à un taux (16) d'une taille de l'espace mémoire de données à une première valeur, la première valeur est égale à une taille de l'espace mémoire ECC moins une taille du i^{ème} espace mémoire dégradé, et i est un entier supérieur ou égal à 1 ;
le fait de déterminer (802) si une taille de l'espace mémoire isolé est inférieure ou égale à la taille du i^{ème} espace mémoire dégradé ; et
si oui, l'utilisation (803) du i^{ème} taux de redondance intermédiaire (16) comme premier taux de redondance.

5. Procédé selon la revendication 4, comprenant en outre :
la livraison en sortie (804) d'une i^{ème} information d'avertissement, dans lequel la i^{ème} information d'avertissement indique que l'espace mémoire isolé apparaît dans la première mémoire.

6. Procédé selon la revendication 4 ou 5, dans lequel, si la taille de l'espace mémoire isolé est égale à la taille du i^{ème} espace mémoire dégradé, le procédé comprend en outre :
la détermination d'un (i+1)^{ème} taux de redondance intermédiaire (16), dans lequel le (i+1)^{ème} taux de redondance intermédiaire (16) correspond à un (i+1)^{ème} espace mémoire dégradé, le (i+1)^{ème} taux de redondance intermédiaire (16) est égal à un taux (16) de la taille de l'espace mémoire de données à une seconde valeur, et la seconde valeur est égale à la taille de l'espace mémoire ECC moins une taille du (i+1)^{ème} espace mémoire dégradé ;
le fait de déterminer si la taille de l'espace mémoire isolé est inférieure ou égale à la taille du (i+1)^{ème} espace mémoire dégradé ; et
si oui, l'utilisation du (i+1)^{ème} taux de redondance intermédiaire (16) comme premier taux de redondance.

7. Procédé selon la revendication 6, comprenant en outre :
la livraison en sortie d'une (i+1)^{ème} information d'avertissement, dans lequel la (i+1)^{ème} information d'avertissement indique que l'espace mémoire isolé apparaît dans la première mémoire.

8. Procédé selon la revendication 7, dans lequel si le (i+1)^{ème} taux de redondance intermédiaire (16) est égal à 0, la (i+1)^{ème} information d'avertissement indique en outre de remplacer la première mémoire.

9. Procédé selon l'une quelconque des revendications 6 à 8, dans lequel une différence entre la taille du i^{ème} espace mémoire dégradé et la taille du (i+1)^{ème} espace mémoire dégradé est supérieure ou égale à une différence entre la taille du (i+1)^{ème} espace mémoire dégradé et une taille d'un (i+2)^{ème} espace mémoire dégradé.

10. Système de traitement (1100), dans lequel le système de traitement (1100) comprend un dispositif de commande de mémoire et une pluralité de types de mémoires, et le dispositif de commande de mémoire est configuré pour réaliser le procédé selon l'une quelconque des revendications 1 à 9.

11. Système de traitement (1100) comprenant :
un stockage (1132), configuré pour stocker un programme (1142) ; et
un processeur, configuré pour exécuter le programme (1142) stocké dans le stockage (1132), dans lequel lorsque le programme (1142) est exécuté, le processeur est configuré pour réaliser le procédé selon l'une quelconque des revendications 1 à 9.

12. Support de stockage lisible par ordinateur, comprenant des instructions informatiques, dans lequel, lorsque les instructions informatiques sont exécutées sur un ordinateur, l'ordinateur est activé pour réaliser le procédé selon l'une quelconque des revendications 1 à 9.
